# EUROPEAN PATENT SPECIFICATION

(11) **EP 1 347 613 B1**
(45) Date of publication and mention of the grant of the patent: **06.09.2006**
(21) Application number: 03005375.5
(22) Date of filing: 12.03.2003
(51) Int. Cl.: H04L 29/06, H04L 12/66, H04L 12/64

(54) **Gateway for a communication system**
Netzübertragunseinrichtung für Kommunicationssystem
Unité de connexion de réseaux pour système de communication

(30) Priority: 12.03.2002 JP 2002067582
(43) Date of publication of application: 24.09.2003
(73) Proprietor: NEC CORPORATION, Tokyo (JP)
(72) Inventor: Suzuki, Johji, Minato-ku, Tokyo (JP); Saito, Tomoki, Minato-ku, Tokyo (JP)
(74) Representative: Glawe, Delfs, Moll

(56) References cited:
- EP-A- 0 837 579
- EP-A- 0 969 628
- EP-A- 1 049 291
- EP-A- 1 089 502
- US-A1- 2002 021 465

## Description

### BACKGROUND OF THE INVENTION

### 1.Field of the Invention

The present invention relates to communication connecting different kinds of networks and networks of the same kind with each other, more particularly, to data relaying between an IP (Internet Protocol) network for use in a computer connected to the broadband Internet or a LAN (Local Area Network) and an IEEE1394 bus which is a serial bus standard for controlling such hardware as a digital video camera by means of a computer, and more particularly, to a communication system, a gateway device and a gateway program for relaying data between a plurality of IEEE1394 buses as a serial bus standard.

### 2. Description of the Related Art

In recent years, the widespread of broadband Internet access has increased chances of Internet broadcasting of video and music and download service of multimedia contents. These contents are handled as files of a local computer and a remote computer or as real-time stream data which can be viewed and listened to through a computer terminal or the like.

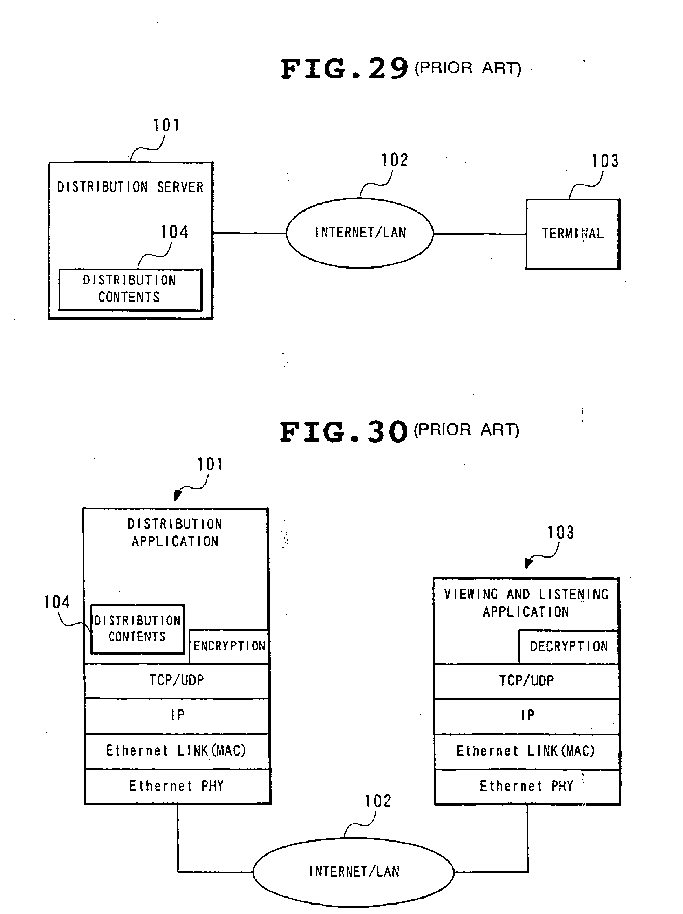

Fig. 29 shows one example of an Internet broadcasting system using the Internet or a LAN (Local Area Network). A distribution server 101 connected to an Internet/LAN 102 is a server which accumulates distribution contents 104 as multimedia data for distributing video and music. A terminal 103 connected to the Internet 102 is a terminal for requesting the distribution contents 104 from the distribution server 101 to obtain/reproduce the same. From the distribution contents 104 stored in the distribution server 101, target contents can be specified using a URL (Uniform Resource Locator) composed of an address of the distribution server 101 and position of the distribution contents 104 on the server.

Fig. 30 shows a protocol stack of the Internet broadcasting system illustrated in Fig. 29. The protocol stack of the distribution server 101 is made of Ethernet(R) PHY, Ethernet(R) LINK (MAC: Media Access Control), IP, TCP (Transmission Control Protocol)/UDP (User Datagram Protocol) and a distribution application from the bottom. Managed on the distribution application are the distribution contents 104. The protocol stack of the terminal 103 is made of Ethernet(R) PHY, Ethernet(R) LINK (MAC), IP, TCP/UDP and a viewing and listening application from the bottom.

The viewing and listening application of the terminal 103 first designates a URL composed of the distribution server 101 and the distribution contents 104 and based on information about the distribution server 101 contained in the URL, the terminal 103 connects to the distribution server 101, whereby from the viewing and listening application of the terminal 103, designated information of contents to be viewed and listened to is transmitted to the distribution application of the distribution server 101 through the protocol stack shown in Fig. 30.

The distribution application of the distribution server 101 transmits the contents designated by the viewing and listening application of the terminal 103 toward the viewing and listening application of the terminal 103 through the protocol stack shown in Fig. 30. Reproduction of the contents by the viewing and listening application having received the contents enables viewing and listening thereof.

When the distribution contents 104 accumulated in the distribution server 101 are copyrighted, such arrangement is possible that the contents are enciphered before transmission by the distribution application of the distribution server 101, and the viewing and listening application of the reception side terminal 103 conducts processing of decryption a code as required.

Although the description has been made here with respect to a case where the distribution contents 104 on the distribution server 101 are identified by a URL, this operation is not exclusively applicable to distribution contents identifiable by a URL, but the same operation is applicable to other arrangement. In a case where the distribution server 101 is a file server, for example, distribution contents can be specified using a computer name for identifying a file server, a folder indicative of a position of distribution contents on the file server, and a file name in place of a URL, so that the terminal 103 is allowed to view and listen to the distribution contents 104.

As a standard for a bus suitable for networks including multimedia-related hardware, IEEE1394-1995 standard and IEEE1394a-2000 standard (generically referred to as "IEEE1394" hereinafter) have drawn attention and more and more AV apparatuses intended for viewing and listening of video and music have been mounted with IEEE1394.

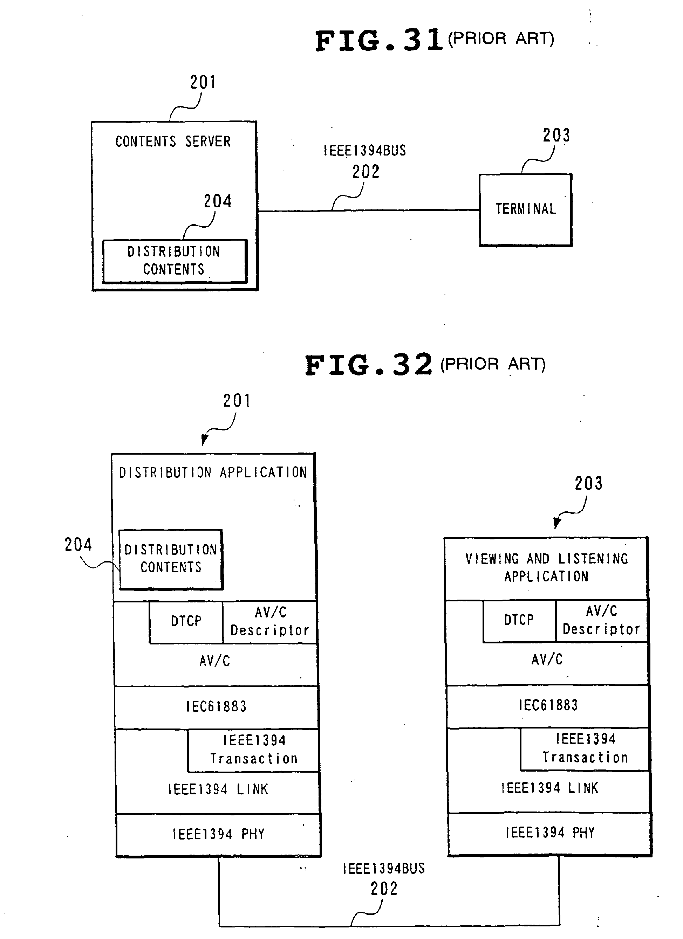

Fig. 31 shows one example of a system for viewing and listening to distribution contents 204 in a contents server 201 from a terminal 203 through an IEEE1394 bus 202. Here, assume the contents server 201 to be an AV-HDD (Audio Visual - Hard Disk Drive).

Fig. 32 shows a protocol stack of the system for viewing and listening to contents on the IEEE1394 bus, 202 illustrated in Fig. 31. A protocol stack of the contents server 201 is composed of IEEE1394 PHY, IEEE1394 LINK, IEEE1394 Transaction, IEC61883 and AV/C from the bottom. The IEC61883 and AV/C are protocols for controlling an AV (Audio Visual) apparatus. AV/C includes DTCP (Digital Transmission Content Protection) as an encryption/authentication system intended for copyright protection and AV/C Descriptor indicating information/location of contents. In a higher layer of the stack, a server application is provided to manage the distribution contents 204.

On the other hand, a protocol stack of the terminal 203 is composed of IEEE1394 PHY, IEEE1394 LINK, IEEE1394 Transaction, IEC61883 and AV/C from the bottom. AV/C includes DTCP and AV/C Descriptor. In a higher layer of the stack, a viewing and listening application is provided to enable viewing and listening of the distribution contents 204.

The viewing and listening application of the terminal 203 is allowed to know the existence of the distribution contents 204 accumulated in the contents server 201 by the information of the AV/C Descriptor and makes a request for necessary contents to the accumulation server 201. In response to the request from the terminal 203, the server application of the contents server 201 transfers the distribution contents 204 through the protocol stack shown in Fig. 32, so that reproduction is conducted on the terminal 203.

When the contents accumulated in the contents server 201 are copyrighted, the DTCP in the contents server 201 conducts authentication of a data transfer destination terminal and encryption of the contents and the DTCP on the reception side terminal 203 decrypts the enciphered data.

Although the description has been made here with respect to a case of an AV-HDD, this operation is not exclusively applicable to an AV-HDD, but the same operation is applicable to a digital AV apparatus other than AV-HDD. In a case where the contents server 201 is a tuner, for example, the distribution contents 204 will not be stored inside the apparatus, to which contents receivable by broadcasting are equivalent, but data including information similar to that of an AV-HDD is transmitted and received on the IEEE1394 to execute the same operation.

EP 0 837 579 A discloses a data transfer control device for a case of controlling transfer of information data to a receiving note connected with a first physical network from a transmitting note connected with a second physical network.

EP 1 049 291 A discloses a gateway device bridging a network system to an external network, which is capable of address mapping.

Moreover, the IEEE1394 has a problem that the number of apparatuses connected to one bus is limited to 63 at the most, so that every time an apparatus is connected and disconnected with the bus, the bus is initialized to cut off communication during initialization. To cope this problem, the IEEE1394 TA (Trade Association) has normalized the IEEE1394 bridge (P1394.1) for the connection of a plurality of buses

The above-described conventional techniques, however, have the following shortcomings.

First, in a case where the Internet/LAN to which a distribution server is connected and an IEEE1394 bus to which a terminal is connected are connected to each other, the terminal on the IEEE1394 bus is not allowed to receive distribution contents on the distribution server.

The reason is that such a terminal as an AV apparatus is an apparatus not supported by a protocol on the Internet/LAN and is accordingly not capable of receiving distribution contents on the Internet/LAN to hinder user's facility.

Secondly, in a case where the Internet/LAN and an IEEE 1394 are connected to each other, a terminal on the IEEE1394 bus is not only incapable of receiving contents from a distribution server on the Internet/LAN but also incapable of recognizing the distribution server and the distribution contents.on the distribution server.

The reason is that because the terminal is incapable of recognizing contents on the Internet/LAN, no user is basically allowed to select required distribution contents 104, which hinders user's facility.

Thirdly, in a case where the Internet/LAN to which a file server is connected and an IEEE 1394 bus to which a terminal is connected are connected to each other, such a terminal on the IEEE1394 bus as an AV apparatus which is incapable of IP communication is not allowed to access the file server on the Internet/LAN.

The reason is that because such an apparatus not supported by IP communication as an AV apparatus is incapable of accessing a file on the Internet/LAN and therefore not allowed to receive distribution contents stored in the file to hinder user's facility.

Fourthly, in a case where the Internet/LAN to which a file server is connected and an IEEE 1394 bus to which a terminal is connected are connected to each other, the terminal on the IEEE1394 bus is not only incapable of receiving distribution contents from the file server but also incapable of recognizing a distribution server and distribution contents on the distribution server.

The reason is that because the terminal is incapable of recognizing distribution contents on the file server, no user is basically allowed to select necessary distribution contents, which hinders user's facility.

Fifthly, in a case where an IEEE1394 bus on which a contents server exists and an IEEE 1394 bus on which a viewing and listening terminal exists are connected to each other, the viewing and listening terminal on the IEEE 1394 bus is not allowed to access distribution contents of the contents server on the IEEE1394 bus.

The reason is that since these IEEE1394 buses, are separated, when the buses are connected using an IEEE1394 bridge, packets conformed to a predetermined standard related to AV apparatus control supporting a conventional IEEE1394 bridge can be neither transmitted nor received, so that the viewing and listening terminal on the IEEE1394 bus is not allowed to access the contents server on the IEEE1394 bus and is therefore not allowed to receive distribution contents stored in the server, thereby hindering user's facility.

Sixthly, in a case where an IEEE1394 bus on which a contents server exists and an IEEE 1394 bus on which a viewing and listening terminal exists are connected to each other, the viewing and listening terminal on the IEEE 1394 bus is not only incapable of receiving distribution contents from the contents server but also incapable of recognizing the contents server and the distribution contents in the contents server.

The reason is that because the viewing and listening terminal is incapable of recognizing distribution contents on the contents server, no user is basically allowed to select necessary distribution contents, which hinders user's facility.

Seventhly, in a case where an IEEE1394 bus on which a distribution terminal exists and an IEEE 1394 bus on which a viewing and listening terminal exists are connected to each other, the viewing and listening terminal on the IEEE 1394 bus is not allowed to access the distribution terminal on the IEEE1394 bus.

The reason is that since these IEEE1394 buses are separated, when the buses are connected using an IEEE1394 bridge, packets conformed to a predetermined standard related to AV apparatus control supporting a conventional IEEE1394 bridge can be neither transmitted nor received, so that the viewing and listening terminal on the IEEE1394 bus is not allowed to access the distribution terminal on the IEEE1394 bus and is therefore not allowed to receive distribution contents stored in the terminal, thereby hindering user's facility.

### SUMMARY OF THE INVENTION

A first object of the present invention is to solve the above-described conventional problems and to provide a communication system, a gateway device and a gateway program which enable, in an environment where a plurality of networks are connected, a user terminal to receive distribution contents through the gateway device as if it communicates with a distribution server by notifying the user terminal as if the distribution contents in the distribution server exist in the gateway device.

A second object of the present invention is to solve the above-described conventional problems and to provide a communication system, a gateway device and a gateway program by which contents recognized and selected on a user terminal are obtained from a network on a distribution server side and converted to have a data format receivable by the user terminal, so that then the converted contents are transferred to a network on the user terminal side.

A third object of the present invention is to provide a communication system, a gateway device and a gateway program which enable a user terminal to recognize which contents can be viewed and listened by notifying the user terminal of correspondence table information indicative of distribution contents in a distribution server and indicative of to which data of contents of the gateway device the distribution contents correspond.

A fourth object of the present invention is to provide a communication system, a gateway device and a gateway program which enable a user terminal to recognize with ease which contents can be viewed and listened by notifying, at the time of generating correspondence table information indicative of distribution contents in a distribution server and indicative of to which data of contents of the gateway device the distribution contents correspond, the user terminal of the correspondence table information with information visibly recognizable with ease added.

A fifth object of the present invention is to provide a communication system, a gateway device and a gateway program which prevent, when distribution contents in a distribution server are copyrighted, viewing and listening of the copyrighted distribution contents by a third party by conducting decryption of a code of the distribution contents and encryption of the same at the time of distribution in the gateway device.

In a plurality of networks connected through a gateway device, the present invention thus notifies a user terminal as if distribution contents in a distribution server exist in the gateway device. As a result, the user terminal is allowed to receive the distribution contents as if it communicates with the distribution server through the gateway device.

In addition, for handling the distribution contents in the distribution server as contents in the gateway device, the present invention generates correspondence table information indicative of correspondence between the distribution contents in the distribution server and the contents in the gateway device. Moreover, the distribution contents in the distribution server are distributed with their data format changed to a format allowing the user terminal to view and listen to the contents. This arrangement enables the gateway device to recognize which distribution server is to distribute and which distribution contents are to be distributed based on the number of contents designated by the user terminal to transmit the distribution contents to the user terminal, thereby allowing the user terminal to view and listen to the distribution contents.

Furthermore, by notifying the user terminal of correspondence table information indicative of correspondence between the distribution contents in the distribution server and the contents in the gateway device, the user terminal is allowed to recognize which contents can be viewed and listened.

The present invention furthermore enables the user terminal to recognize with ease which contents can be viewed and listened by notifying, at the time of generating correspondence table information indicative of correspondence between distribution contents in the distribution server and contents in the gateway device, the user terminal of the correspondence table information with information visibly recognizable with ease added.

The present invention moreover enables provision of a function of, when distribution contents in the distribution server are copyrighted, preventing a third party from viewing and listening to the copyrighted distribution contents by conducting decryption of a code of the distribution contents and encryption of the same at the time of distribution in the gateway device.

According to the first aspect of the invention, a communication system for distributing contents between a distribution server and a terminal according to claim 1 is provided. The dependent claims refer to preferred constructions.

According to the second aspect of the invention, a gateway program for controlling a computer to relay distribution of contents between a terminal and a distribution server connected to networks independent of each other according to claim 15 is provided. The dependent claims refer to preferred constructions.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing a structure of a communication system according to a first embodiment of the present invention;
Fig. 2 is a diagram showing a protocol stack of a network according to the first embodiment of the present invention;
Fig. 3 is a diagram showing an internal structure of an AV gateway device according to the first embodiment of the present invention;
Fig. 4 is a flow chart showing a procedure at the time of notifying a terminal of information about distribution contents in the first embodiment of the present invention;
Fig. 5 is a diagram showing correspondence table information indicative of server information and track information in the first embodiment of the present invention;
Fig. 6 is a structural diagram obtained when inserting the correspondence table information indicative of the server information and the track information according to the first embodiment of the present invention into a command having contents information;
Fig. 7 is a flow chart for use in explaining a procedure at the time of viewing and listening to distribution contents by the AV gateway device in the first embodiment of the present invention;
Fig. 8 is a diagram showing correspondence table information indicative of server information and track information in a second embodiment of the present invention;
Fig. 9 is a structural diagram obtained when inserting the correspondence table information indicative of the server information and the track information according to the second embodiment of the present invention into a command having contents information;
Fig. 10 is a diagram showing a protocol stack of a network according to a third embodiment of the present invention;
Fig. 11 is a flow chart for use in explaining a procedure at the time of viewing and listening to distribution contents by an AV gateway device in the third embodiment of the present invention;
Fig. 12 is a block diagram showing a structure of a communication system according to a fourth embodiment of the present invention;
Fig. 13 is a diagram showing a protocol stack of a network according to the fourth embodiment of the present invention;
Fig. 14 is a diagram showing correspondence table information indicative of server information and track information in the fourth embodiment of the present invention;
Fig. 15 is a structural diagram obtained when inserting the correspondence table information indicative of the server information and the track information according to the fourth embodiment of the present invention into a command having contents information;
Fig. 16 is a diagram showing a protocol stack of a network according to a fifth embodiment of the present invention;
Fig. 17 is a block diagram showing a structure of a communication system according to a sixth embodiment of the present invention;
Fig. 18 is a diagram showing a protocol stack of a network according to the sixth embodiment of the present invention;
Fig. 19 is a diagram showing an internal structure of an AV gateway device according to the sixth embodiment of the present invention;
Fig. 20 is a diagram showing correspondence table information indicative of server information and track information in the sixth embodiment of the present invention;
Fig. 21 is a structural diagram obtained when inserting the correspondence table information indicative of the server information and the track information according to the sixth embodiment of the present invention into a command having contents information;
Fig. 22 is a diagram showing a protocol stack of a network according to a seventh embodiment of the present invention;
Fig. 23 is a block diagram showing a structure of a communication system according to an eighth embodiment of the present invention;
Fig. 24 is a diagram showing a protocol stack of a network according to the eighth embodiment of the present invention;
Fig. 25 is a diagram showing correspondence table information indicative of server information and track information in the eighth embodiment of the present invention;
Fig. 26 is a structural diagram obtained when inserting the correspondence table information indicative of the server information and the track information according to the eighth embodiment of the present invention into a command having contents information;
Fig. 27 is a diagram showing a protocol stack of a network according to a variation of the eighth embodiment of the present invention;
Fig. 28 is a diagram showing a protocol stack of a network according a ninth embodiment of the present invention;
Fig. 29 is a diagram showing a network structure using TCP/IP as a conventional technique;
Fig. 30 is a diagram showing a protocol stack of a network using TCP/IP as a conventional technique;
Fig. 31 is a diagram showing a network structure using an IEEE1394 bus as a conventional technique; and
Fig. 32 is a diagram showing a protocol stack of a network using an IEEE1394 bus as a conventional technique.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

### (First Embodiment)

An AV gateway device (gateway device) according to the present embodiment, which is realized by a program-controlled CPU (e.g. personal computer) or the like, distributes such contents on the Internet as Internet broadcast to an IEEE1394 network to enable viewing and listening on a terminal on the IEEE1394.

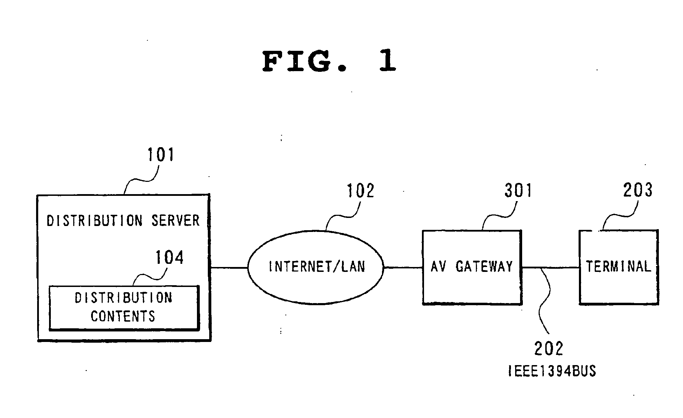

Fig. 1 shows a network structure of the present embodiment. In the network, there exist an Internet/LAN 102 capable of IP communication and a bus 202 conformed to IEEE1394 (serial bus related predetermined standard), with the Internet 102 and the IEEE1394 bus 202 being connected to each other through an AV gateway device 301. Here, a distribution server 101 for distributing real-time contents is connected to an arbitrary part of the Internet/LAN 102. Also, a terminal 203 for viewing and listening to real-time contents is connected to the IEEE1394 bus.

The distribution server 101 has a communication protocol such as TCP (Transmission Control Protocol)/IP (Internet Protocol) standardized by IETF (Internet Engineering Task Force) and a distribution application function such as a Web server necessary for distributing contents, whereby a terminal (not shown) connected to the Internet/LAN 102 is allowed to view and listen to, arbitrary contents from the distribution server 101. Assume here that by designating a URL (Uniform Resource Locator) composed of the distribution server 101 and a location of distribution contents 104, the distribution contents 104 can be obtained. In addition, the distribution contents 104 have a video format made of MPEG (Moving Picture Experts Group) 4.

Moreover, the terminal 203 (user terminal) has a function based on IEEE1394-1995 or IEEE1394a-2000 (generically referred to as "IEEE1394" hereinafter) standardized by IEEE (Institute of Electrical and Electronics Engineers) and a function based on AV/C Digital Command Set General Specification standardized by IEEE1394TA (IEEE1394 Trade Association) to enable transfer of a group of AV/C commands by making use of the IEEE1394 function. The terminal 203 is assumed to be capable of receiving an MPEG2 video format.

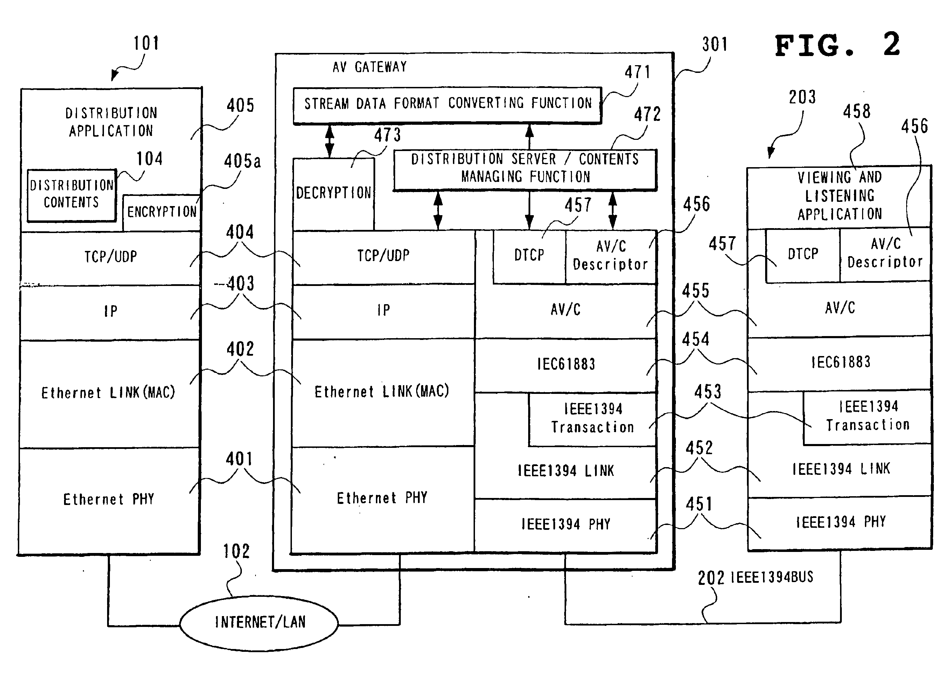

Fig. 2 shows a protocol stack in the network structure illustrated in Fig. 1. A protocol stack of the distribution server 101 is made, from the bottom, of an Ethernet(R) PHY 401, an Ethernet(R) LINK (MAC: Media Access Control) 402, an IP 403, a TCP/UDP (User Datagram Protocol) 404, a distribution application 405 and the distribution contents 104 to be distributed directed to a terminal. The distribution application 405 is provided with a Web server function necessary for contents distribution, an encryption function 405a for protecting copyright of contents and other functions including a function of managing the distribution contents 104.

Next, a protocol stack of the AV gateway device 301 includes, on the side of the Internet/LAN 102, the Ethernet(R) PHY 401, the Ethernet(R) LINK 402, the IP 403, the TCP/UDP 404 and a decryption function 473 for decryption contents enciphered by the distribution server 101 from the bottom and on the IEEE1394 202 side, an IEEE1394 PHY 451, an IEEE1394 LINK 452, an IEEE1394 Transaction 453, an IEC61883 454, an AV/C 455, a DTCP (Digital Transmission Content Protection) 457 for enciphering copyrighted contents and authenticating an apparatus and an AV/C Descriptor 456 as a function of notifying contents and apparatus information, and further includes as a function of connecting the Internet/LAN 102 side and the IEEE1394 bus 202, a stream data format converting function 471 for converting a contents format and a distributions server/contents managing function 472 for managing contents of the distribution server and notifying the terminal 203 of contents information.

Lastly, a protocol stack of the terminal 203 includes, from the bottom, the IEEE1394 PHY 451, the IEEE1394 LINK 452, the IEEE1394 Transaction 453, the IEC61883 454, the AV/C 455, the DTCP 457 for decryption copyrighted contents and authenticating an apparatus and the AV/C Descriptor 456 as a function of notifying contents and apparatus information, and further includes at the highest layer, a viewing and listening application 458 for viewing and listening to contents.

Here, the IEEE1394 side of the AV gateway device 301 has a function equivalent to AV-HDD (Audio Visual-Hard Disk Drive) based on AV/C Digital Command Set General Specification and has an AV/C command which is mounted in an AV-HDD. Assume here that a contents reproduction command is provided. Also provided is a Subunit (function) for indicating an AV-HDD. The terminal 203 is mounted with a protocol communicable with an AV-HDD and has an AV/C Subunit (function) for indicating an AV apparatus.

Although Fig. 2 is premised on that a physical I/F (Interface) on the side of the Internet/LAN 102 is Ethernet(R), it is not limited to Ethernet(R).

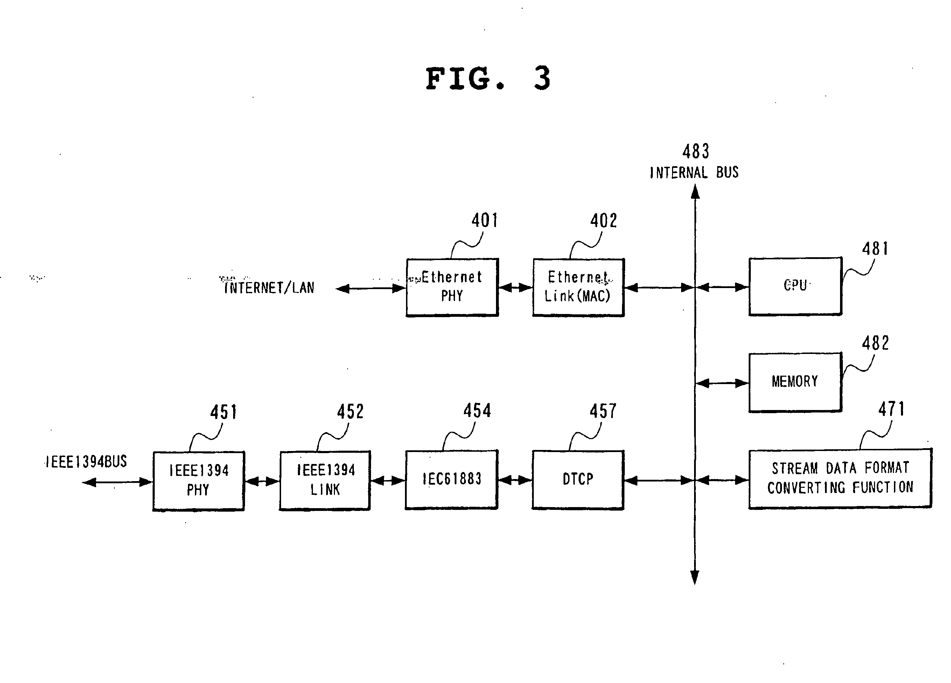

Fig. 3 shows an internal structure of the AV gateway device 301 according to the present embodiment. The AV gateway device 301 has an I/F connected to the Internet/LAN side and an I/F connected to the IEEE1394 bus, which are connected to each other through an internal bus 483.

The I/F on the Internet/LAN side is composed of the functions of the Ethernet(R) PHY 401 and the Ethernet(R) LINK (MAC) 402. The I/F on the IEEE1394 side is composed of the functions of the IEEE1394 PHY 451, the IEEE1394 LINK 452, the IEC61883 454, and the DTCP 457. The internal bus 483 is composed of a CPU 481 for operating the AV gateway device 301, a memory 482 and a format converting function 471 for converting stream data.

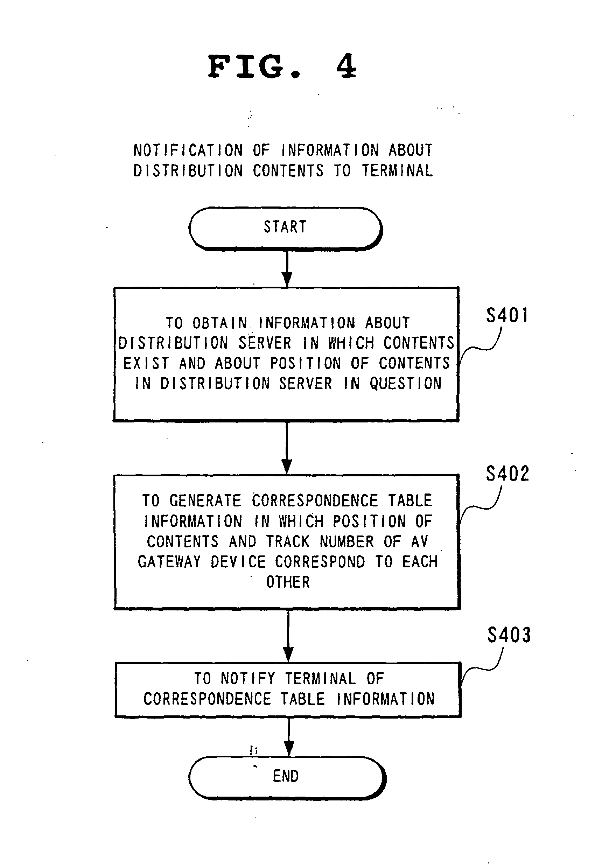

With respect to thus structured AV gateway device 301, a procedure for notifying the terminal 203 of information about the distribution contents 104 will be described with reference to Figs. 4 to 6. Fig. 4 is a flow chart showing a procedure at the time of notifying the terminal of information about distribution contents.

First, the distribution server/contents managing function 472 of the AV gateway device 301 obtains information related to the distribution contents 104 to be viewed and listened to (Step S401). The information is obtained by automatic acquisition by the distribution server/contents managing function 472 or manual input by a user. The information about the distribution contents 104 is composed of information indicative of in which distribution server the distribution contents exist and information indicative of in which position of the distribution server the contents exist. Assume here that information of the distribution server 101 and that of the distribution contents 104 correspond thereto. The present information is stored in the memory 482 shown in Fig. 3.

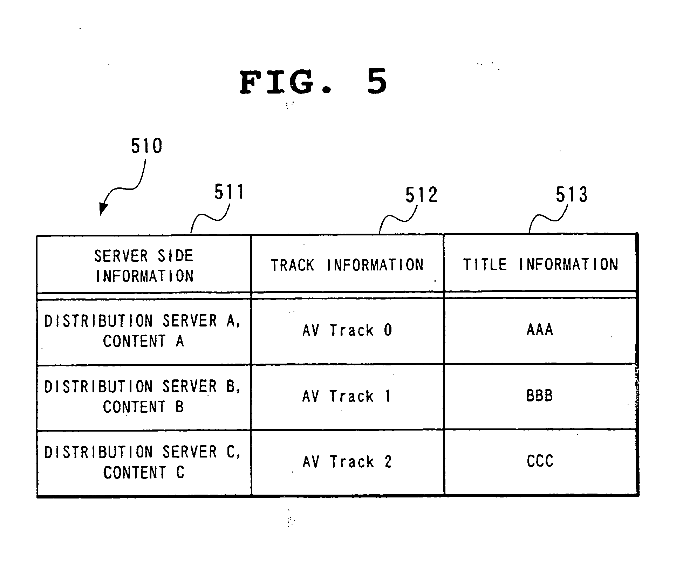

Next, in order to pretend as if information on the side of the distribution server 101 is the content in the AV gateway device 301, generate correspondence table information 510 such that the information of the distribution server 101 and the distribution contents 104 corresponds to a track number (e.g. AV Track Number 0) which is track information in the AV gateway device 301 (Step 5402). The correspondence table information 510, as illustrated in Fig. 5, is made up of server side information 511 which designates a distribution server and contents, track information 512 which designates a track number corresponding to contents and title information 513 as information visibly indicating the contents of the corresponding track number. The correspondence table information 510 is generated on the memory 482 in the AV gateway device 301. When a plurality of contents are registered, generate the correspondence table information 510 such that each of the server side information 511 corresponds to each of the plurality of tracks.

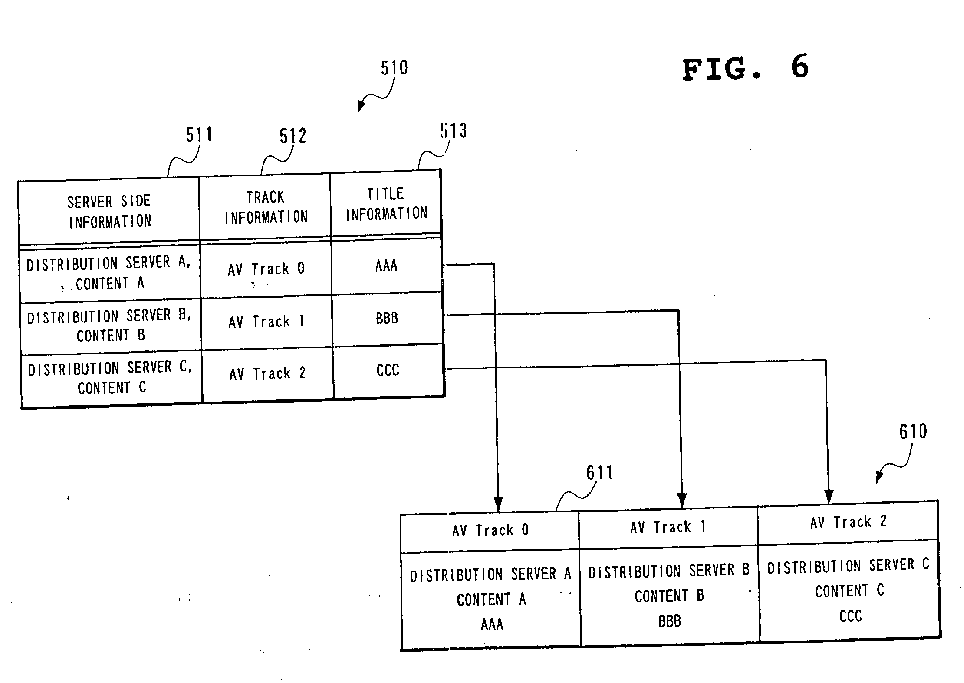

The correspondence table information 510 shown in Fig. 5 is notified to the terminal 203 by using the AV/C Descriptor 456. At this time, as illustrated in Fig. 6, with reference to the correspondence table information 510, add information 611 composed of the server side information, the track information and the title information to a command 610 having contents information and notify the terminal 203 that the distribution contents 104 of the distribution server 101 correspond to the track number Track No. 0 (Step S403). The information 611 added to the command 610 having contents information does not necessarily need to include information of the distribution server 101 and the distribution contents 104, but any information which can one-to-one correspond to information about the distribution server 101 and the distribution contents 104 is applicable such as arbitrary information included in the distribution contents 104 or information registered by a user.

Upon receiving the command 610 having contents information, the terminal 203 becomes aware of the existence of the distribution contents 104 connected to the Internet/LAN 102.

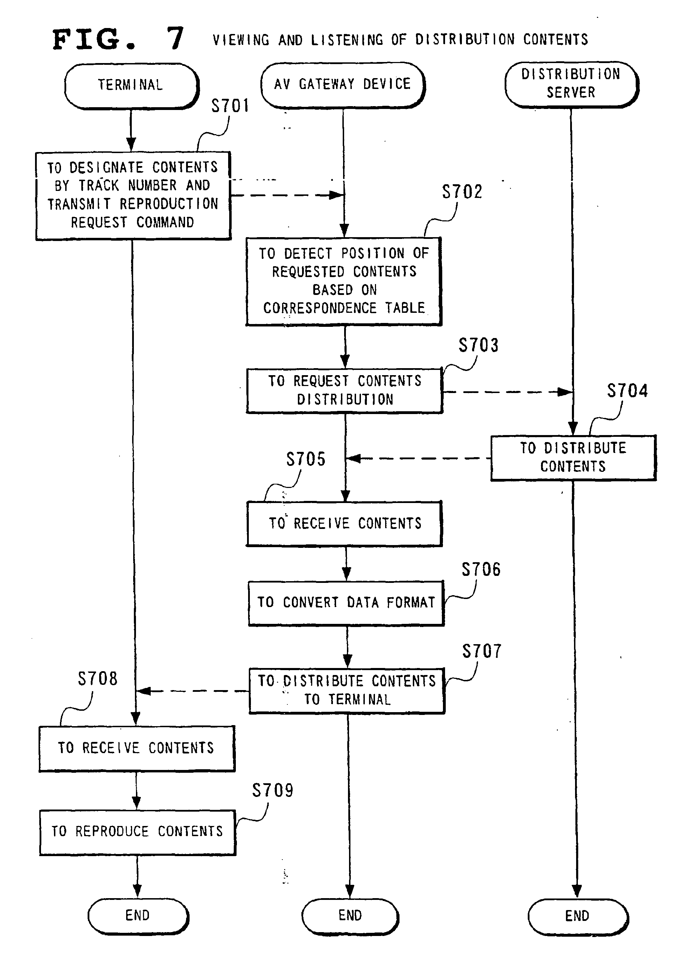

Next, description will be made of a procedure executed with respect to the AV gateway device 301 at the time of viewing and listening to the distribution contents 104 from the terminal 203 with reference to the flow chart shown in Fig. 7.

The terminal 203 transmits a reproduction request command to the AV gateway device 301 for reproducing the track number Track No. 0 corresponding to the distribution contents 104 for the purpose of viewing and listening to the distribution contents 104 (Step S701). This reproduction request is made with reference to the title information visibly indicative of track contents of the information 611 added to the command 610.

Upon receiving the request command for reproducing the track number Track No. 0, the AV gateway device 301 recognizes from the correspondence table information 510 shown in Fig. 5 that the track number Track No. 0 indicates the distribution contents 104 of the distribution server 101 (Step S702). Next, the AV gateway device 301 requests contents distribution by designating a URL composed of the distribution server 101 and the distribution contents 104 (Step S703). Upon receiving the request, the distribution server 101 starts distributing the distribution contents 104 (Step S704).

The distribution application 405 in the distribution server 101 transmits the distribution contents 104 through the TCP/UDP 404, the IP 403, the Ethernet(R) LINK 402 and the Ethernet(R) PHY 401 to distribute the same to the AV gateway device 301. At this time, when the distribution contents 104 are the contents copyrighted, the distribution application 405 in the distribution server 101 subjects the distribution contents 104 to encryption processing and transmits the enciphered contents.

Simultaneously with the start of transmission of the distribution contents 104 by the distribution server 101, the AV gateway device 301 starts reception of the distribution contents 104 (Step S705). The distribution contents 104 received from the Ethernet(R) port are sent to the stream data format converting function 471 through the Ethernet(R) PHY 401, the Ethernet(R) LINK 402, the IP 403 and the TCP/UDP layer 404. At this time, when the distribution contents 104 are contents copyrighted and enciphered, they are sent to the stream data format converting function 471 after their codes are decrypted.

Since the stream format of the distribution contents 104 received by the AV gateway device 301 is MPEG4 and the stream format receivable by the terminal 203 is MPEG2, the AV gateway device 301 sends the received distribution contents 104 to the stream data format converting function 471 to conduct video format conversion of the distribution contents (Step S706).

The distribution contents 104 converted to MPEG2 are transmitted to the IEEE1394 bus 202 through the AV/C 455, the IEC61883 454, the IEEE1394 LINK 452 and the IEEE1394 PHY 451. At this time, when the distribution contents 104 are contents copyrighted, the contents are transmitted to the terminal 203 through the IEEE1394 bus 202 after they are enciphered at the DTCP 457 (Step S707).

Next, the terminal 203 starts receiving the distribution contents 104 transmitted by the AV gateway device 301 (Step S708). The distribution contents 104 received through the IEEE1394 PHY 451, the IEEE1394 LINK 452, the IEC61883 454 and the AV/C 455 are reproduced by the viewing and listening application 458, so that they can be viewed and listened on the terminal 203. At this time, when the distribution contents 104 are contents copyrighted and enciphered, they are reproduced by the viewing and listening application 458 after their codes are decrypted at the DTCP 457 (Step S709).

### (Second Embodiment)

An AV gateway device according to a second embodiment of the present invention distributes such contents on the Internet as Internet broadcast to an IEEE1394 network to enable the same to be viewed and listened by a terminal on the IEEE1394.

Network structure of the present embodiment is the same as that of the above-described first embodiment shown in Fig. 1 and a protocol stack of the apparatus is the same as that of the above-described first embodiment shown in Fig. 2, and a structure of the AV gateway device 301 is also the same as that of the above-described first embodiment shown in Fig. 3.

Here, the IEEE1394 side of the AV gateway device 301 has a function equivalent to a Tuner based on AV/C Digital Command Set General Specification and has an AV/C command which is mounted in a Tuner. Also provided is a Subunit (function) for indicating a Tuner. Assume here that a reception command is provided for understanding service reception. The terminal 203 is mounted with a protocol communicable with a Tuner and has an AV/C Subunit (function) for indicating an AV apparatus.

Apparatuses of the present embodiment have the same functions as those of the above-described first embodiment.

With respect to thus structured AV gateway device 301, a procedure for notifying the terminal 203 of information about the distribution contents 104 will be described with reference to the drawings. As the procedure conducted at the notification of the information about the distribution contents 104, the same processing as that shown in the flow chart of Fig. 4 which has been described in the first embodiment is executed. In the present embodiment, the track information in Fig. 4 is replaced by service information.

First, the distribution server/contents managing function 472 of the AV gateway device 301 obtains information related to the distribution contents 104 to be viewed and listened to (Step S401). The information is obtained by automatic acquisition by the distribution server/contents managing function 472 or manual input by a user. The information about the distribution contents 104 is composed of information indicative of in which distribution server 101 the distribution contents 104 exist and information indicative of at which position of the distribution server 101 the contents exist. Assume here that information of the distribution server 101 and that of the distribution contents 104 correspond thereto. The present information is stored in the memory 482 shown in Fig. 3.

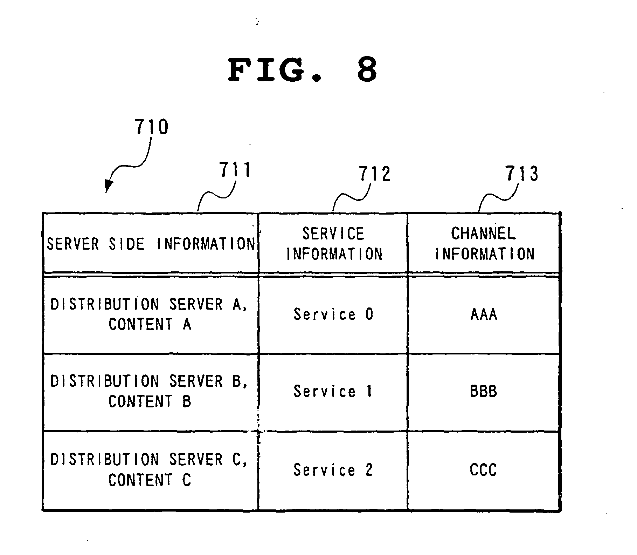

Next, in order to pretend as if information on the side of the distribution server 101 is broadcast received by the AV gateway device 301, generate correspondence table information 710 such that the information of the distribution server 101 and the distribution contents 104 corresponds to Service No. 0 which is a service number in the AV gateway device 301 (Step S402). The correspondence table information 710, as illustrated in Fig. 8, is made up of server side information 711 which designates a distribution server and contents, service information 712 which designates a service number corresponding to contents and channel information 713 as information visibly indicating the contents of the corresponding service number. The correspondence table information 710 is generated on the memory 482 in the AV gateway device 301. When a plurality of contents are registered, generate the correspondence table information 710 such that each of the server side information 711 corresponds to each of the plurality of tracks.

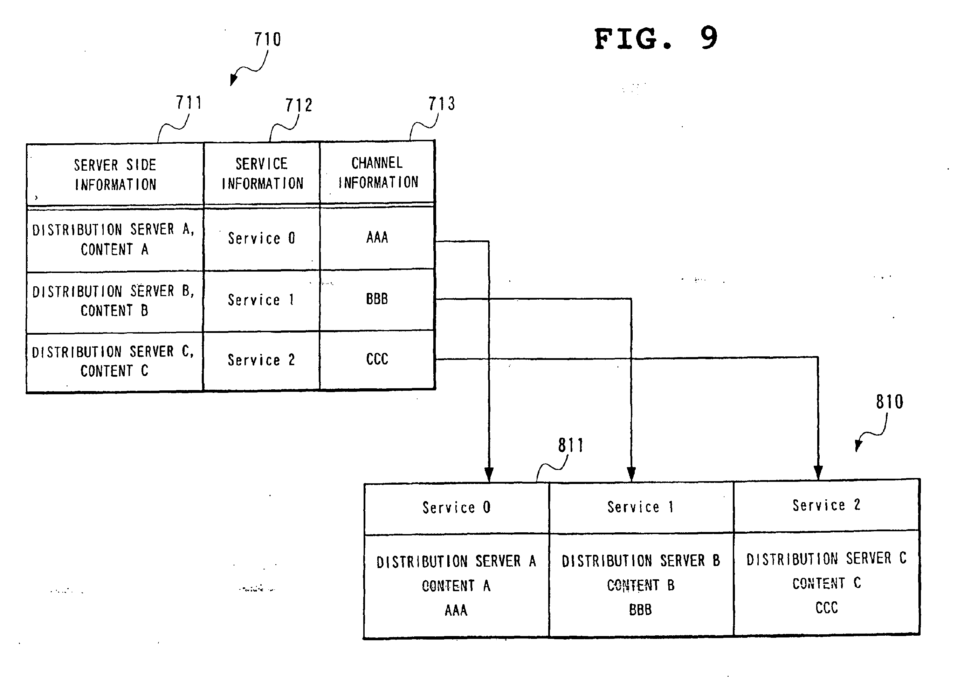

The correspondence table information 710 shown in Fig. 8 is notified to the terminal 203 by using the AV/C Descriptor 456. At this time, as illustrated in Fig. 9, with reference to the correspondence table information 710, add information 811 composed of the server side information, service information and channel information to a command 810 having the service information 712 and notify the terminal 203 that the distribution contents 104 of the distribution server 101 correspond to the service number Service No. 0 (Step S403). The information 811 added to the command 810 having the service information 712 does not necessarily need to include information of the distribution server 101 and the distribution contents 104, but any information which can one-to-one correspond to information about the distribution server 101 and the distribution contents 104 is applicable such as arbitrary information included in the distribution contents 104 or information registered by a user.

Upon receiving the command 810 having the service information 712, the terminal 203 becomes aware of the existence of the distribution contents 104 connected to the Internet/LAN 102.

Next, description will be made of a procedure executed with respect to the AV gateway device 301 at the time of viewing and listening to the distribution contents 104 from the terminal 203 with reference to the drawings. The procedure executed when viewing and listening to the distribution contents is the same as that of the flow chart shown in Fig. 7 which is described in the first embodiment. In the present embodiment, in a reproduction request command from the terminal 203, a service number is designated in place of a track number.

The terminal 203 transmits a reception request command to the AV gateway device 301 for receiving the service number Service No. 0 corresponding to the distribution contents 104 for the purpose of viewing and listening to the distribution contents 104 (Step S701). This reproduction request is made with reference to the channel information visibly indicative of service contents of the information 811 added to the command 810.

Upon receiving the request command for receiving the service number Service No. 0, the AV gateway device 301 recognizes from the correspondence table information 710 shown in Fig. 8 that the service number Service No. 0 indicates the distribution contents 104 of the distribution server 101 (Step S702). Next, the AV gateway device 301 requests contents distribution by designating a URL composed of the distribution server 101 and the distribution contents 104 (Step S703). Upon receiving the request, the distribution server 101 starts distributing the distribution contents 104 (Step S704).

The distribution contents 104 of the distribution server 101 are subjected to the same processing as that of the above-described first embodiment for the terminal 203, so that the distribution contents 104 can be viewed and listened to on the terminal 203 (Steps S705 to 709).

### (Third Embodiment)

An AV gateway device according to a third embodiment of the present invention distributes such contents on the Internet as Internet broadcast to an IEEE1394 network to enable the same to be viewed and listened by a terminal on the IEEE1394.

Network structure of the present embodiment is the same as that of the above-described first embodiment shown in Fig. 1 and a structure of the AV gateway device 301 is the same as that of the above-described first embodiment shown in Fig. 3.

Here, the IEEE1394 side of the AV gateway device 301 has a function equivalent to a VCR (Video Cassette Recorder) based on AV/C Digital Command Set General Specification and has an AV/C command which is mounted in a VCR. Assume here that contents reproduction, fast forwarding and rewinding commands are provided. Also provided is a Subunit (function) for indicating a VCR. The terminal 203 is mounted with a protocol communicable with a VCR and has an AV/C Subunit (function) for indicating an AV apparatus.

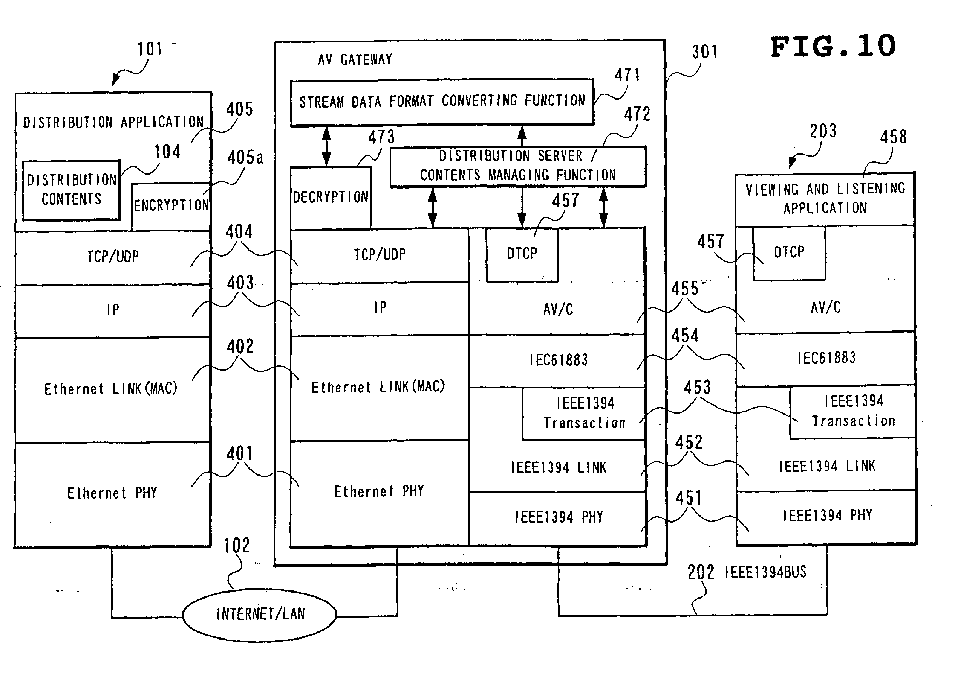

As compared with the above-described first embodiment shown in Fig. 2, a protocol stack of the present embodiment is, as shown in Fig. 10, is the same with the only difference in failing to include the AV/C descriptor 456 mounted in the higher layer of the IEEE1394.

Apparatuses of the present embodiment have the same functions as those of the above-described first embodiment.

With respect to thus structured AV gateway device 301, a procedure for generating information related to the distribution contents 104 will be described with reference to the drawings. As the procedure of generating information about the distribution contents 104, the same processing as that shown in the flow chart of Fig. 4 which has been described in the first embodiment is executed.

In the present embodiment, the system is used in such a manner as after a user registers information about the distribution contents 104 and the distribution server 101 which stores the distribution contents 104 in question in the AV gateway device 301, the user views and listens to the distribution contents 104 the user registers from the terminal 203.

First, the distribution server/contents managing function 472 of the AV gateway device 301 obtains information related to the distribution contents 104 to be viewed and listened to (Step S401). The information is obtained by automatic acquisition by the distribution server/contents managing function 472 or manual input by a user. The information related to the distribution contents 104 is composed of information indicative of in which distribution server 101 the distribution contents 104 exist and information indicative of at which position of the distribution server 101 the contents exist. Assume here that information of the distribution server 101 and that of the distribution contents 104 correspond thereto. The present information is stored in the memory 482 shown in Fig. 3.

Next, in order to pretend as if information on the side of the distribution server 101 is the content in the AV gateway device 301, generate the correspondence table information 510 such that the information of the distribution server 101 and the distribution contents 104 corresponds to a track number (e.g. AV Track No. 0) which is track information in the AV gateway device 301 (Step S402). The correspondence table information 510, as illustrated in Fig. 5, is made up of the server side information 511, the track information 512 and the title information 513. The correspondence table information 510 is generated on the memory 482 in the AV gateway device 301. When a plurality of contents are registered, generate the correspondence table information 510 such that each of the server side information corresponds to each of the plurality of tracks. In this embodiment failing to have the AV/C Descriptor 456, the correspondence table information 510 is not notified to the terminal 203.

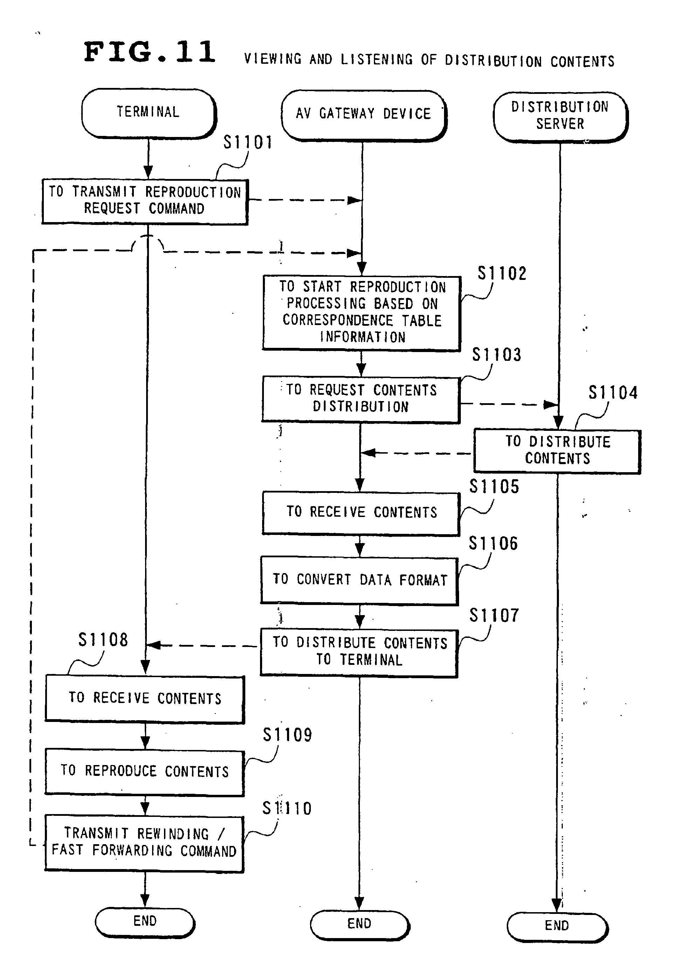

Next, description will be made of a procedure executed with respect to the AV gateway device 301 at the time of viewing and listening to the distribution, contents 104 from the terminal 203 with reference to the flow chart of Fig. 11.

The terminal 203 transmits a reproduction request command to the AV gateway device 301 in order to view and listen to the distribution contents 104 (Step S1101).

The AV gateway device 301 having received the reproduction command from the terminal 203 starts reproduction processing starting with the track number Track No. 0 in the correspondence table information 510 shown in Fig. 5 (Step S1102). More specifically, since the track number Track No. 0 indicates the distribution contents 104 of the distribution server 101, the AV gateway device 301 requests contents distribution by designating the URL composed of the distribution server 101 and the distribution contents 104 (Step S1103). The distribution server 101 having received the request starts distribution of the distribution contents 104 (Step S1104).

The distribution contents 104 of the distribution server 101 are subjected to the same processing as that of the above-described first embodiment for the terminal 203, whereby the distribution contents 104 can be viewed and listened on the terminal 203 (Steps 1105 to S1109).

Here, in a case where a plurality of the correspondence table information shown in Fig. 5 exist and the distribution contents 104 fail to exist at the track number Track No. 0, the user transmits the fast forwarding command from the terminal 203 (Step S1110). The distribution server/contents managing function 472 of the AV gateway device 301 having received the fast forwarding command cancels the reproduction processing of the track number Track No. 0 to control reproduction so as to start reproduction start processing of the subsequent track number Track No. 1 according to the above-described procedure. As a result of the user's transmission of the fast forwarding command until the distribution contents 104 can be viewed and listened, the AV gateway device 301 conducts reproduction processing of the subsequent track number.

Conversely, when the rewinding command is transmitted from the terminal 203 (Step S1110), the distribution server/contents managing function 472 of the AV gateway device 301 cancels reproduction of the Track being currently subjected to reproduction processing to start reproduction processing of an immediately preceding Track. As a result, contents corresponding to an arbitrary Track can be viewed and listened from the terminal 203.

Although for the selection of an arbitrary Track here, the fast forwarding command and the rewinding command are used, other command or a new command can be defined and the selection processing is not limited to the fast forwarding command and the rewinding command.

### (Fourth Embodiment)

An AV gateway device according to a fourth embodiment of the present invention distributes such contents on a LAN as a file in a file server to an IEEE1394 network to enable the contents to be viewed and listened on a terminal on the IEEE1394.

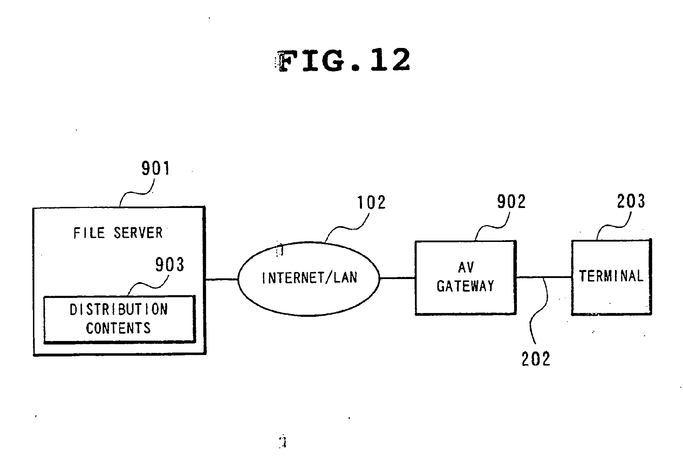

Fig. 12 shows a network structure of the present embodiment. In the network, there exist the Internet/LAN 102 capable of IP communication and the bus 202 conformed to IEEE1394 (serial bus related predetermined standard), with the Internet 102 and the IEEE1394 bus 202 being connected to each other through an AV gateway device 902. Here, the file server 101 for storing contents is connected to an arbitrary place of the Internet/LAN 102. In addition, the terminal 203 for viewing and listening to the contents is connected to the IEEE1394 bus 202.

In addition, a file server 901 has a communication protocol such as TCP/IP and such a function as a file sharing application 903a for sharing a contents file in a network, so that a terminal connected to the Internet/LAN 102 is allowed to view and listen to arbitrary contents on the file server 901. Assume here that distribution contents 903 can be obtained by designating the file server 901 and the distribution contents 903. The distribution contents 903 are assumed to have a video format of MPEG4.

Moreover, the terminal 203 has a function based on IEEE1394 and a function based on AV/C Digital Command Set General Specification to enable transfer of a group of AV/C commands by making use of the IEEE1394 function. The terminal 203 is also assumed to be capable of receiving an MPEG2 video format.

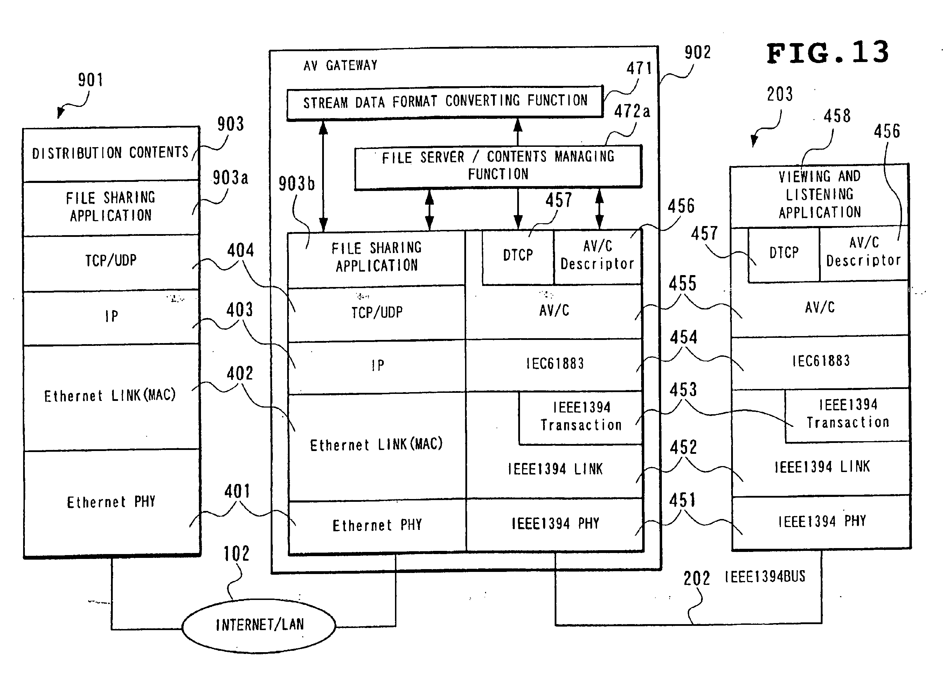

Fig. 13 shows a protocol stack in the network structure illustrated in Fig. 12. A protocol stack of the file server 901 is made of the Ethernet(R) PHY 401, the Ethernet(R) LINK (MAC: Media Access Control) 402, the IP 403, the TCP/UDP (User Datagram Protocol) 404, the file sharing application 903a to share a file and the distribution contents 903 from the bottom. The file sharing application 903a has such a function of sharing a file in a network as a "file and printer sharing" function mounted on Windows(R) OS as standard, for example, and NFS (Network File System) used in UNIX(R) and such functions, not limited to those described above, may be any function that can realize the equivalent function.

Next, a protocol stack of the AV gateway device 902 includes, on the side of the Internet/LAN 102, the Ethernet(R) PHY 401, the Ethernet(R) LINK 402, the IP 403, the TCP/UDP 404 and a file sharing application 903b from the bottom and on the IEEE1394 202 side, the IEEE1394 PHY 451, the IEEE1394 LINK 452, the IEEE1394 Transaction 453, the IEC61883 454, the AV/C 455, and functions of the DTCP (Digital Transmission Content Protection) 457 for enciphering copyrighted contents and authenticating an apparatus and the AV/C Descriptor 456 for notifying contents and apparatus information from the bottom, and further includes as a function of connecting the Internet/LAN 102 side and the IEEE1394 bus 202, the stream data format converting function 471 for converting a contents format and a file server/contents managing function 472a for managing contents of the distribution server 901 and notifying the terminal 203 of contents information.

Lastly, a protocol stack of the terminal 203 includes, from the bottom, the IEEE1394 PHY 451, the IEEE1394 LINK 452, the IEEE1394 Transaction 453, the IEC61883 454, the AV/C 455, and functions of the DTCP 457 for decryption copyrighted contents and authenticating an apparatus and the AV/C Descriptor 456 for notifying contents and apparatus information, and further includes at the highest layer, the viewing and listening application 458 for viewing and listening to contents.

Here, the IEEE1394 side of the AV gateway device 902 has a function equivalent to an AV-HDD based on AV/C Digital Command Set General Specification and has an AV/C command mounted in an AV-HDD. Assume here that a contents reproduction command is provided. Also provided is a Subunit (function) for indicating an AV-HDD. The terminal 203 is mounted with a protocol communicable with an AV-HDD and has an AV/C Subunit (function) for indicating an AV apparatus.

Although Fig. 12 is premised on that a physical I/F on the side of the Internet/LAN 102 is Ethernet(R), it is not limited to Ethernet(R).

An internal structure of the AV gateway device 902 according to the present embodiment is the same as that of the above-described first embodiment as illustrated in Fig. 3.

With respect to thus structured AV gateway device 902, a procedure for notifying the terminal 203 of information about the distribution contents 903 will be described with reference to the drawings. As the procedure conducted at the time of notifying information about the distribution contents 903, the same processing is executed as that of the flow chart shown in Fig. 4 which is described in the first embodiment.

First, the file server/contents managing function 472a of the AV gateway device 902 obtains information related to the distribution contents 903 to be viewed and listened to (Step S401). The information is obtained by manual input by a user, for example. The information related to the distribution contents 903 is composed of information indicative of in which file server 901 the distribution contents 903 exist and information indicative of in which position of the file server 901 the contents exist. Assume here that information of the file server 901 and that of the distribution contents 903 correspond thereto. The present information is stored in the memory 482 shown in Fig. 3.

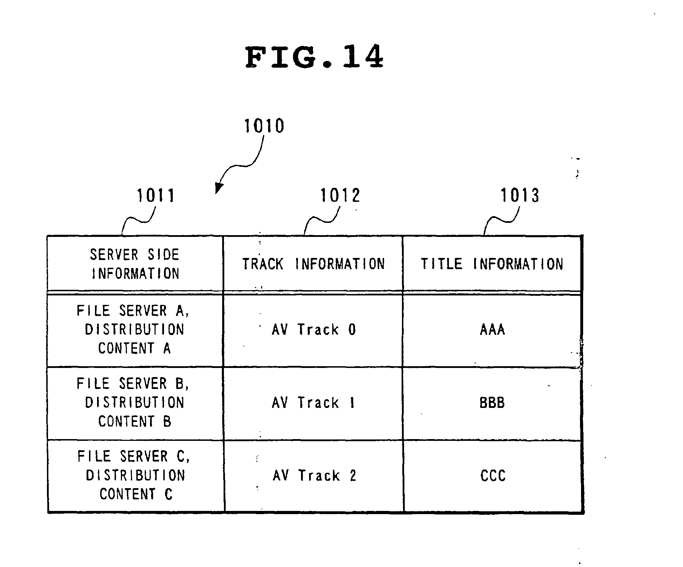

Next, in order to pretend as if information on the side of the file server 901 is the content in the AV gateway device 902, generate correspondence table information 1010 such that the information of the file server 901 and the distribution contents 903 corresponds to a track number AV Track Number 0 in the AV gateway device 902 (Step S402). The correspondence table information 1010 is generated by a user based on the above-described obtained information. The correspondence table information 1010, as illustrated in Fig. 14, is made up of server side information 1011 which designates a file server and contents, track information 1012 which designates a track number corresponding to contents and title information 1013 as information visibly indicating the contents of the corresponding track number. The correspondence table information 1010 is generated on the memory 482 in the AV gateway device 902. When a plurality of contents are registered, generate the correspondence table information 1010 such that each of the server side information corresponds to each of the plurality of tracks.

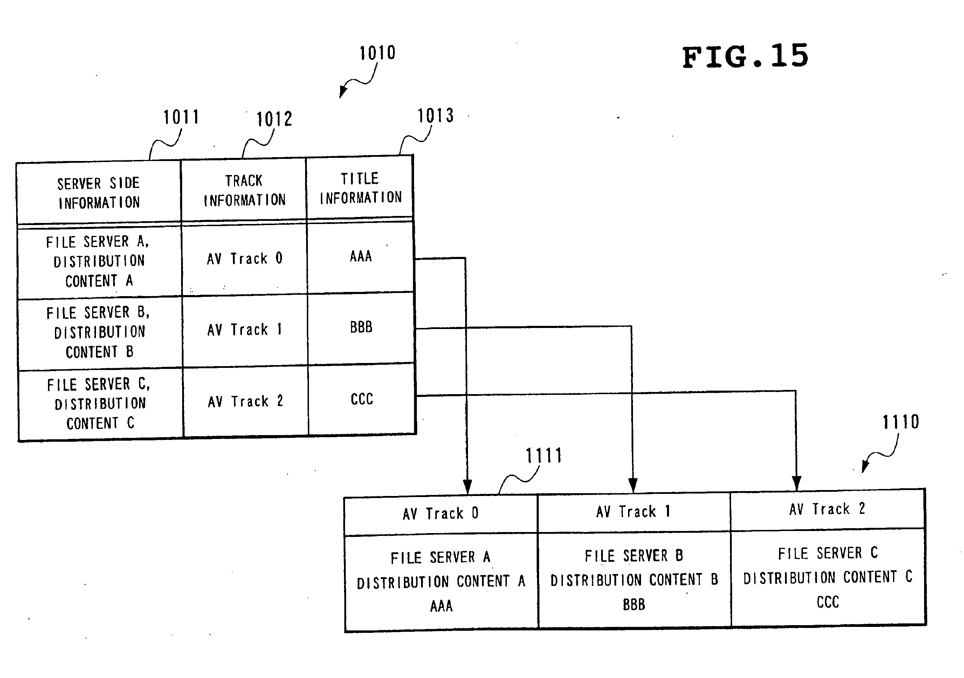

The correspondence table information 1010 shown in Fig. 14 is notified to the terminal 203 by using the AV/C Descriptor 456. At this time, as illustrated in Fig. 15, with reference to the correspondence table information 1010, add information 1111 related to the file server 901 and the distribution contents 903 which is composed of the server side information, the track information and the title information to a command 1110 having contents information and notify the terminal 203 that the distribution contents 903 of the file server 901 correspond to the track number Track No. 0 (Step S403). The information 1111 added to the command 1110 having contents information does not necessarily need to include the information of the file server 901 and the distribution contents 903, but any information which can one-to-one correspond to information about the file server 901 and the distribution contents 903 is applicable such as arbitrary information included in the distribution contents 903 or information registered by a user.

Upon receiving the command 1110 having contents information, the terminal 203 becomes aware of the existence of the distribution contents 903 connected to the Internet/LAN 102.

Next, description will be made of a procedure executed with respect to the AV gateway device 902 at the time of viewing and listening to the distribution contents 104 from the terminal 203 with reference to the drawings. The procedure conducted at the time of viewing and listening to distribution contents is realized by the same processing as that of the flow chart shown in Fig. 7 which is described in the first embodiment.

The terminal 203 transmits a reproduction request command to the AV gateway device 902 for reproducing the track number Track No. 0 corresponding to the distribution contents 903 for the purpose of viewing and listening to the distribution contents 903 (Step S701). This reproduction request is made with reference to the title information visibly indicative of track contents of the information 1111 added to the command 1110.

Upon receiving the request command for reproducing the track number Track No. 0, the AV gateway device 902 recognizes from the correspondence table information 1010 shown in Fig. 14 that the track number Track No. 0 indicates the distribution contents 903 of the file server 901 (Step S702). Next, the AV gateway device 902 requests distribution of the distribution contents 903 from the file server 901 (Step S703).

The file server 901 transmits the distribution contents 903 through the TCP/UDP 404, the IP 403, the Ethernet(R) LINK 402 and the Ethernet(R) PHY 401 to transmit the same to the AV gateway device 902 (Step S704).

Simultaneously with the start of transmission of the distribution contents 903 by the file server 901, the AV gateway device 902 starts reception of the distribution contents 903 (Step S705). The distribution contents 903 received from the Ethernet(R) port are sent to the stream data format converting function 471 through the Ethernet(R) PHY 401, the Ethernet(R) LINK 402, the IP 403, the TCP/UDP layer 404 and the file sharing application 903b. At this time, when the distribution contents 903 are contents enciphered and copyrighted, they are sent to the stream data format converting function 471 after their codes are decrypted.

Since the distribution contents 903 received by the AV gateway device 902 has a stream format of MPEG4 and a stream format receivable by the terminal 203 is MPEG2, the AV gateway device 902 sends the received distribution contents 903 to the stream data format converting function 471 to conduct conversion of a video format of the distribution contents (Step S706).

The distribution contents 903 converted into MPEG2 are transmitted to the IEEE1394 bus 202 through the AV/C 455, the IEC61883 454, the IEEE1394 LINK 452 and the IEEE1394 PHY 451. At this time, when the distribution contents 903 are copyrighted contents, the contents are transmitted to the terminal 203 through the IEEE1394 bus 202 after they are enciphered at the DTCP 457 (Step S707).

Then, the terminal 203 starts receiving the distribution contents 903 transmitted by the AV gateway device 902 (Step S708). The distribution contents 903 received through the IEEE1394 PHY 451, the IEEE1394 LINK 452, the IEC61883 454 and the AV/C 455 are reproduced by the viewing and listening application 458, so that they can be viewed and listened on the terminal 203. At this time, when the distribution contents 903 are contents copyrighted and enciphered, they are reproduced by the viewing and listening application 458 after their codes are decrypted by the DTCP 457 (Step S709).

### (Fifth Embodiment)

An AV gateway device according to a fifth embodiment of the present invention distributes such contents on LAN as a file in a file server to an IEEE1394 network to enable the same to be viewed and listened by a terminal on the IEEE1394.

Network structure of the present embodiment is the same as that of the above-described fourth embodiment shown in Fig. 12 and a structure of the AV gateway device 902 is the same as that of the above-described first embodiment shown in Fig. 3.

Here, the IEEE1394 side of the AV gateway device 902 has a function equivalent to a VCR based on AV/C Digital Command Set General Specification and has an AV/C command which is' mounted in a VCR. Assume here that contents reproduction, fast forwarding and rewinding commands are provided. Also provided is a Subunit (function) for indicating a VCR. The terminal 203 is mounted with a protocol communicable with a VCR and has an AV/C Subunit (function) for indicating an AV apparatus.

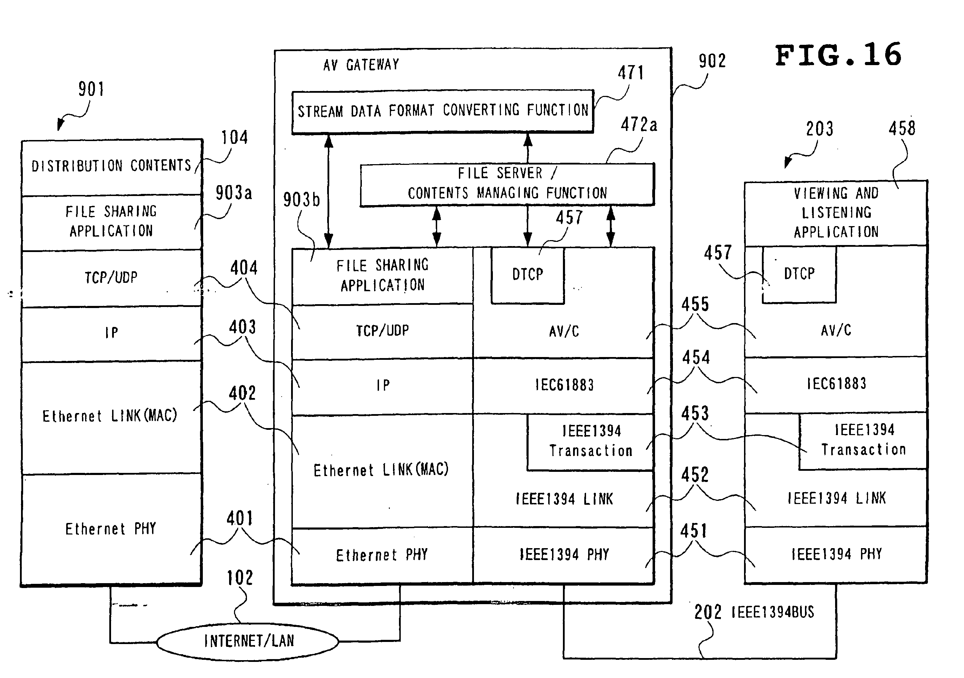

As compared with the above-described fourth embodiment shown in Fig. 13, a protocol stack of the present embodiment is, as shown in Fig. 16, the same with the only difference in failing to include the AV/C descriptor 456 mounted in the higher layer of the IEEE1394.

Apparatuses of the present embodiment have the same functions as those of the above-described fourth embodiment.

With respect to thus structured AV gateway device 902, a procedure for generating information related to the distribution contents 104 will be described with reference to the drawings. As the procedure of generating information related to the distribution contents 104, the same processing is executed as that shown in the flow chart of Fig. 4 which has been described in the first embodiment.

In the present embodiment, the system is used in such a manner as after a user registers information about the distribution contents 104 and the file server 901 which stores the distribution contents 104 in question in the AV gateway device 902, the user views and listens to the distribution contents 104 the user registers from the terminal 203.

First, the file server/contents managing function 472a of the AV gateway device 902 obtains information related to the distribution contents 903 to be viewed and listened (Step S401). The information is obtained by manual input by a user, for example. The information related to the distribution contents 903 is composed of information indicative of in which file server 901 the distribution contents 104 exist and information indicative of at which position of the file server 901 the contents exist. Assume here that information of the file server 901 and that of the distribution contents 903 correspond thereto. The present information is stored in the memory 482 shown in Fig. 3.

Next, in order to pretend as if information on the side of the file server 901 is the content in the AV gateway device 902, generate the correspondence table information 1010 such that the information of the file server 901 and the distribution contents 903 corresponds to track number AV Track No. 0 in the AV gateway device 902 (Step S402). The correspondence table information 1010 is generated by a user based on the above-described obtained information. The correspondence table information 1010, as illustrated in Fig. 14, is made up of the server side information 1011 which designates a file server and contents, the track information 1012 which designates a track number corresponding to contents and the title information 1013 as information visibly indicating the contents of the corresponding track number. The correspondence table information 1010 is generated on the memory 482 in the AV gateway device 902. When a plurality of contents are registered, generate the correspondence table information 1010 such that each of the server side information corresponds to each of the plurality of tracks. In this embodiment failing to have the AV/C Descriptor 456, unlike the fourth embodiment, the correspondence table information 510 is not notified to the terminal 203.

Next, description will be made of a procedure executed with respect to the AV gateway device 902 at the time of viewing and listening to the distribution contents 903 from the terminal 203. In the present embodiment, the same processing is executed as that of the flow chart of Fig. 11 shown in the third embodiment.

The terminal 203 transmits a reproduction request command to the AV gateway device 902 in order to view and listen to the distribution contents 903 (Step S1101).

The AV gateway device 902 having received the reproduction command from the terminal 203 starts reproduction processing starting with the track number Track No. 0 in the correspondence table information 1010 shown in Fig. 14 (Step S1102). It can be seen that the Track No. 0 indicates the distribution content 903 of the file server 901. Next, the AV gateway device 902 requests distribution of the distribution contents 903 from the file server 901 (Step S1103).

The file server 901 starts transmission of the distribution contents 903 to the terminal 203 to execute the same processing as that of the above-described fourth embodiment, whereby the distribution contents 903 can be viewed and listened on the terminal 203 (Steps 1105 to S1109).

Here, in a case where there exist a plurality of the correspondence table information shown in Fig. 14 and the distribution contents 903 fail to exist at the track number Track No. 0, the user transmits the fast forwarding command from the terminal 203 (Step S1110). The file server/contents managing function 472a of the AV gateway device 902 having received the fast forwarding command cancels the reproduction processing of the track number Track No. 0 to control reproduction so as to start reproduction start processing of the subsequent track number Track No. 1 according to the above-described procedure. As a result of the user's transmission of the fast forwarding command until the distribution contents 903 can be viewed and listened, the AV gateway device 902 conducts reproduction processing of the subsequent track number.

Conversely, when the rewinding command is transmitted from the terminal 203 (Step S1110), the file server/contents managing function 472a of the AV gateway device 902 cancels reproduction of the Track being currently subjected to reproduction processing to start reproduction processing of an immediately preceding Track. As a result, contents corresponding to an arbitrary Track can be viewed and listened from the terminal 203.

Although for the selection of an arbitrary Track, the fast forwarding command and the rewinding command are used here, other command or a new command can be defined and the selection processing is not limited to the fast forwarding command and the rewinding command.

### (Sixth Embodiment)

An AV gateway device according to a sixth embodiment of the present invention distributes contents of a contents server or the like on an IEEE1394 to another IEEE1394 network to enable the contents to be viewed and listened on a terminal on the IEEE1394.

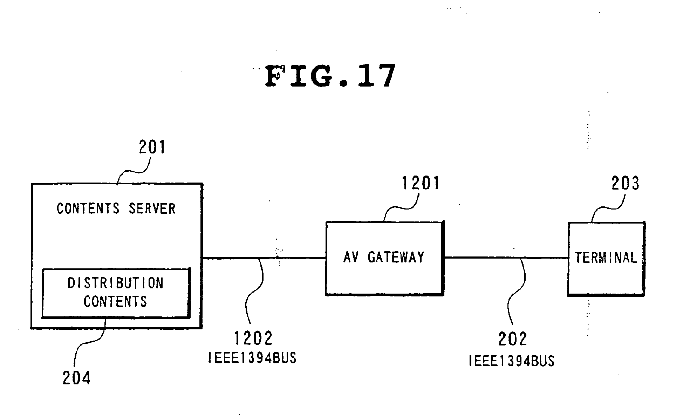

Fig. 17 shows a network structure of the present embodiment. In the network, there exist a bus 1202 conformed to IEEE1394 (serial bus related predetermined standard) and another bus 202 conformed to IEEE1394 (serial bus related predetermined standard), with the IEEE1394 bus 1202 and the IEEE1394 bus 202 being connected to each other through an AV gateway device 1201. Here, the contents server 201 for storing contents has a function of distributing contents to a terminal directly connected to the IEEE1394 bus 1202.

The contents server 201 also has a function based on IEEE1394 and a function based on AV/C Digital Command Set General Specification to enable transfer of a group of AV/C commands by making use of the IEEE1394 function. In addition, the distribution contents 204 have a video format made of DV (Digital Video).

Moreover, the terminal 203 has a function based on IEEE1394 and a function based on AV/C Digital Command Set General Specification to enable transfer of a group of AV/C commands by making use of the IEEE1394 function. In addition, the terminal 203 is assumed to be capable of receiving an MPEG2 video format.

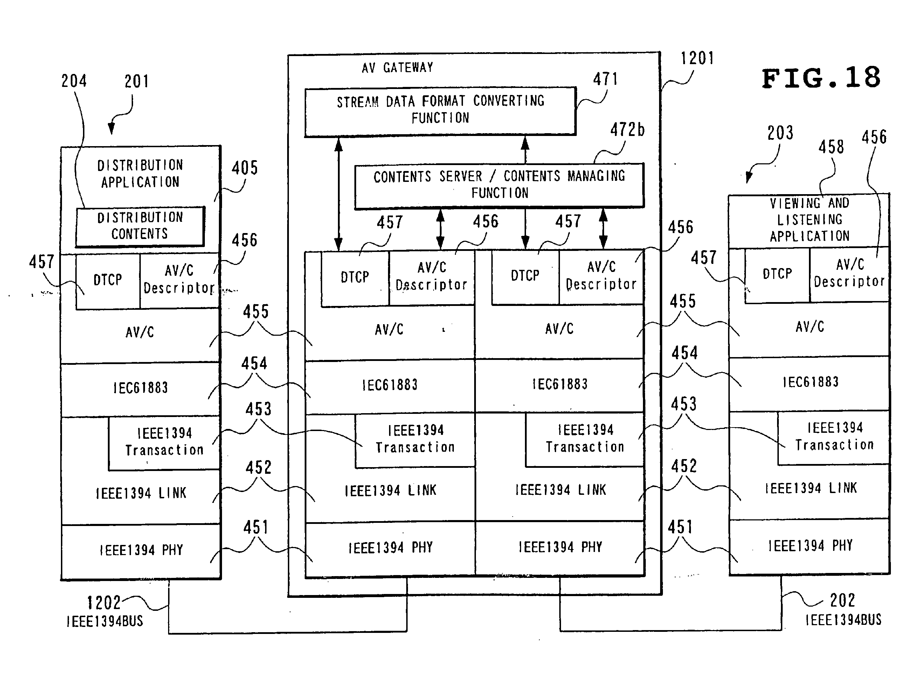

Fig. 18 shows a protocol stack in the network structure illustrated in Fig. 17. A protocol stack of the contents server 201 includes the IEEE1394 PHY 451, the IEEE1394 LINK 452, the IEEE1394 Transaction 453, the IEC61883 454, the AV/C 455, and functions of the DTCP 457 for decryption copyrighted contents and authenticating an apparatus and the AV/C Descriptor 456 for notifying contents and apparatus information from the bottom, and further includes, in the highest layer, the distribution application 405 for distributing contents.

Next, a protocol stack of the AV gateway device 1201 includes, on the IEEE1394 bus 1202 side and on the IEEE1394 bus 202 side from the bottom, the IEEE1394 PHY 451, the IEEE1394 LINK 452, the IEEE1394 Transaction 453, the IEC61883 454, the AV/C 455, and functions of the DTCP 457 for enciphering copyrighted contents and authenticating an apparatus and the AV/C Descriptor 456 for notifying contents and apparatus information, and includes as a function of connecting the IEEE1394 bus 1202 and the IEEE1394 bus 202, the stream data format converting function 471 for converting a contents format and a contents server/contents managing function 472b for managing contents of the contents server and notifying the terminal 203 of contents information.

Lastly, a protocol stack of the terminal 203 includes, from the bottom, the IEEE1394 PHY 451, the IEEE1394 LINK 452, the IEEE1394 Transaction 453, the IEC61883 454, the AV/C 455, and functions of the DTCP 457 for decryption copyrighted contents and authenticating an apparatus and the AV/C Descriptor 456 for notifying contents and apparatus information, and further includes at the highest layer, the viewing and listening application 458 for viewing and listening to contents.

Here, the contents server 201 has a function equivalent to an AV-HDD based on AV/C Digital Command Set General Specification and has an AV/C command mounted in an AV-HDD. Assume here that a contents reproduction command is provided. In addition, on the side of the IEEE1394 bus 1202 of the AV gateway device 1201, a protocol communicable with an AV-HDD is provided and has an AV/C Subunit (function) for indicating an AV apparatus, while the IEEE1394 bus 202 side has a function equivalent to an AV-HDD based on AV/C Digital Command Set General Specification and further includes an AV/C command which is mounted in an AV-HDD. Assume here that a contents reproduction command is provided. The terminal 203 is mounted with a protocol communicable with an AV-HDD. As an interface, an AV/C Subunit (function) indicative of an AV apparatus is provided.

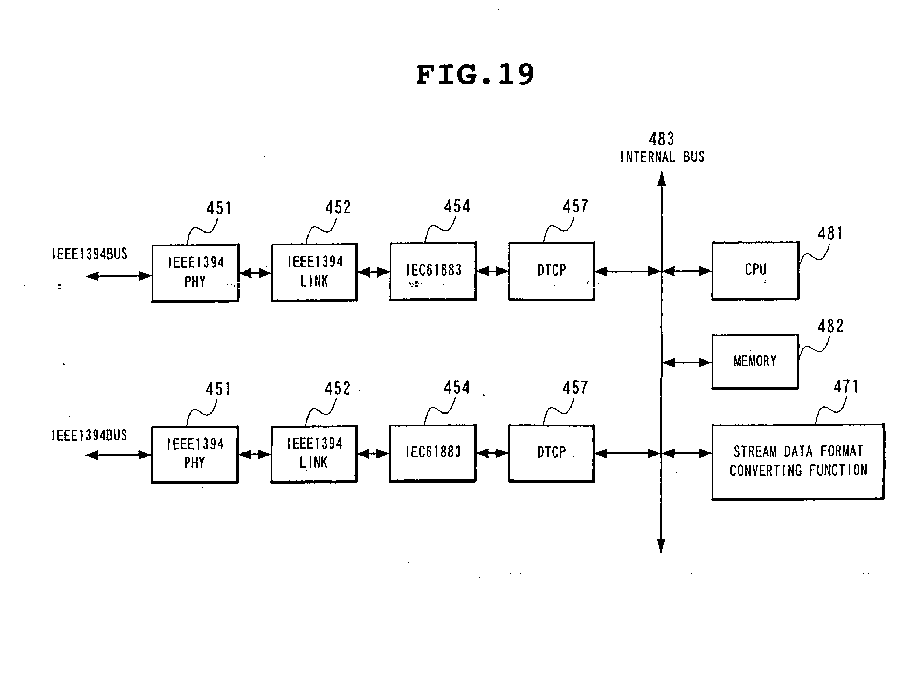

Fig. 19 shows an internal structure of the AV gateway device 1201 according to the present embodiment. The AV gateway device 1201 has two I/Fs connected to the IEEE 1394 bus, which I/Fs are connected to each other through the internal bus 483.

The two I/Fs of the IEEE1394 bus are each composed of the functions of the IEEE1394 PHY 451, the IEEE1394 LINK 452, the IEC61883 454 and the DTCP 475. The internal bus 483 is composed of the CPU 481 for operating the AV gateway device 1201, the memory 482 and the stream data format converting function 471 for converting stream data.

With respect to thus structured AV gateway device 1201, a procedure for notifying the terminal 203 of information about the distribution contents 204 will be described with reference to the drawings. As the procedure conducted at the time of notifying the information about the distribution contents 204, the same processing as in the flow chart of Fig. 4 which is described in the first embodiment is executed.

First, information related to the distribution contents 204 to be viewed and listened to is obtained by the AV gateway device 1201 by manual input by a user or by such a means as automatic acquisition using the contents server/contents managing function 472b of the AV gateway device 1201 (Step S401). Also obtain which track number the distribution contents 204 have from the contents server 201. The information related to the distribution contents 204 is composed of information indicative of in which contents server 201 the distribution contents 204 exist, information indicative of which contents in the contents server 201 to be viewed and listened and information indicative of which number of track constitutes the distribution contents 204 in the contents server 201. Assume here that information of the distribution server 201, that of the distribution contents 204 and that of a server side track number 1413 correspond thereto. The information is stored in the memory 482 shown in Fig. 19.

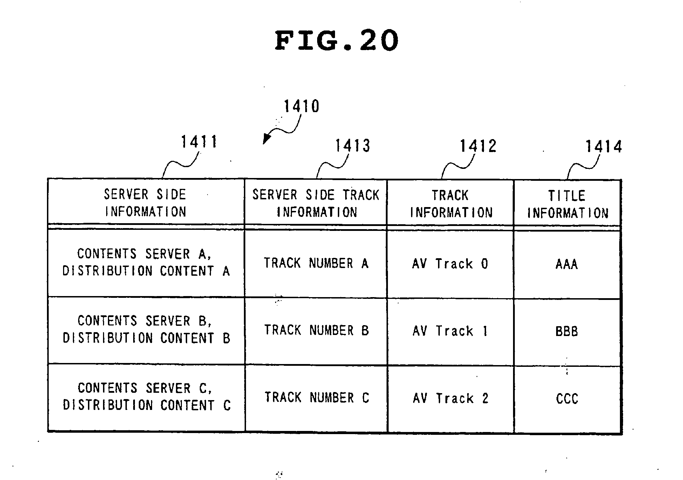

Next, in order to pretend as if information on the side of the contents server 201 is the content in the AV gateway device 1201, generate correspondence table information 1410 such that the information of the contents server 201 and the distribution contents 204 corresponds to a track number (e.g. AV Track Number 0) which is track information in the AV gateway device 1201 (Step S402). The correspondence table information, as illustrated in Fig. 20, is made up of server side information 1411, server side track information 1413, track information 1412, and title information 1414 as information visibly indicating the contents of the corresponding track number. The correspondence table information 1410 is generated on the memory 482 in the AV gateway device 1201. When a plurality of contents are registered, generate the correspondence table information 1410 such that each of the server side information corresponds to each of the plurality of tracks.

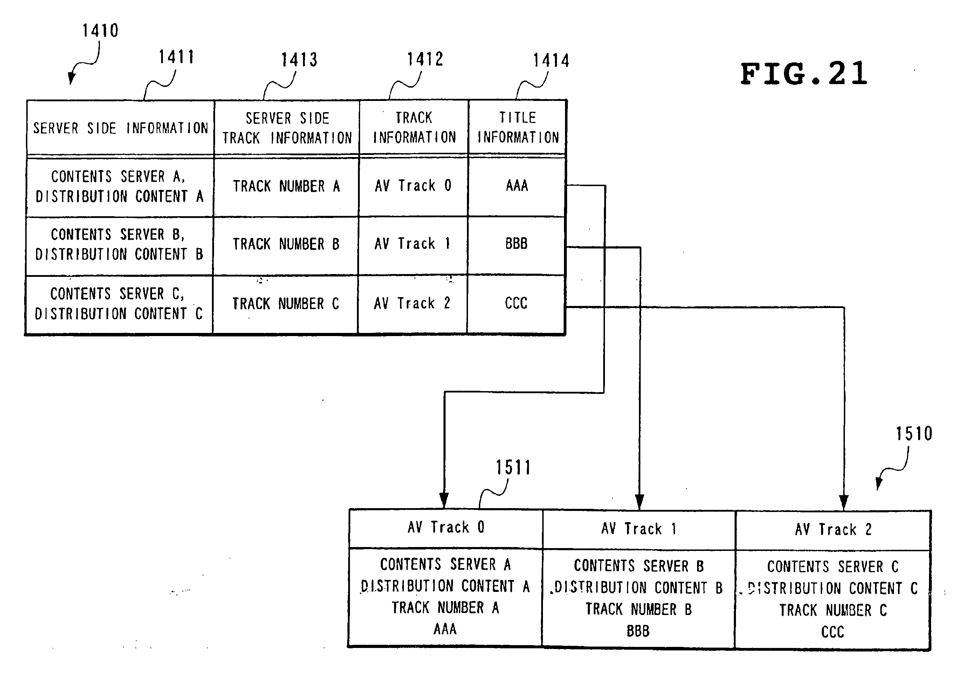

The correspondence table information 1410 shown in Fig. 20 is notified to the terminal 203 by using the AV/C Descriptor 456. At this time, as illustrated in Fig. 21, with reference to the correspondence table information 1410, add information 1511 composed of the server side information, the track information and the title information to a command 1510 having contents information and notify the terminal 203 that the distribution contents 204 of the contents server 201 correspond to the track number Track No. 0 (Step S403). The information 1511 padded to the command 1510 having contents information does not necessarily need to include information of the contents server 201 and the distribution contents 204, but any information which can one-to-one correspond to information about the contents server 201 and the distribution contents 204 is applicable such as arbitrary information included in the distribution contents 204 or information registered by a user.

Upon receiving the command 1510 having contents information, the terminal 203 becomes aware of the existence of the distribution contents 204 connected to another IEEE1394 bus 1202.

Next, description will be made of a procedure executed with respect to the AV gateway device 1201 at the time of viewing and listening to the distribution contents 204 from the terminal 203 with reference to the drawings. The procedure at the time of viewing and listening to the distribution contents is conducted by the same processing as that of the flow chart shown in Fig. 7 which is described in the first embodiment.

The terminal 203 transmits a reproduction request command to the AV gateway device 1201 for reproducing the track number Track No. 0 corresponding to the distribution contents 204 for the purpose of viewing and listening to the distribution contents 204 (Step S701). This reproduction request is made with reference to the title information visibly indicative of track contents of the information 1511 added to the command 1510.

Upon receiving the request command for reproducing the track number Track No. 0, the AV gateway device 1201 recognizes from the correspondence table information 1410 shown in Fig. 20 that the track number Track No. 0 indicates the distribution contents 204 of the contents server 201. Next, to the contents server 201, the AV gateway device 1201 transmits the reproduction request command for reproducing the track number 1203 corresponding to the distribution contents 204 (Step S703).

Upon receiving the reproduction request command, the contents server 201 transmits the distribution contents 204 through the AV/C 455, the IEC61883 454, the IEEE1394 LINK 452 and the IEEE1394 PHY 451 to the IEEE1394 bus 1202 to transmit the same to the AV gateway device 1201 (Step S704). At this time, when the distribution contents 204 are the contents copyrighted, they are transmitted to the IEEE1394 bus 1202 after being enciphered at the DTCP 457.

Simultaneously with the start of transmission of the distribution contents 204 by the contents server 201, the AV gateway device 1201 starts reception of the distribution contents 204 (Step S705). The distribution contents 204 received through the IEEE1394 PHY 451, the IEEE1394 LINK 452, the IEC61883 454 and the AV/C 455 are sent to the stream data format converting function 471. At this time, when the distribution contents 204 are contents enciphered and copyrighted, they are sent to the stream data format converting function 471 after their codes are decrypted at the DTCP 457.

Since the stream format of the distribution contents 204 received by the AV gateway device 1201 is DV and the stream format receivable by the terminal 203 is MPEG2, the AV gateway device 1201 sends the received distribution contents 204 to the stream data format converting function 471 to conduct video format conversion of the distribution contents (Step S706).

The distribution contents 204 converted to MPEG2 are transmitted to the IEEE1394 bus 202 through the AV/C 455, the IEC61883 454, the IEEE1394 LINK 452 and the IEEE1394 PHY 451. At this time, when the distribution contents 204 are contents copyrighted, the contents are transmitted to the terminal 203 through the IEEE1394 bus 202 after they are enciphered at the DTCP 457 (Step S707).

Next, the terminal 203 starts receiving the distribution contents 204 transmitted by the AV gateway device 1201 (Step S708). The distribution contents 204 received through the IEEE1394 PHY 451, the IEEE1394 LINK 452, the IEC61883 454 and the AV/C 455 are reproduced by the viewing and listening application 458, so that they can be viewed and listened on the terminal 203. At this time, when the distribution contents 204 are contents copyrighted and enciphered, they are reproduced by the viewing and listening application 458 after their codes are decrypted at the DTCP 457 (Step S709).

### (Seventh Embodiment)

An AV gateway device according to a seventh embodiment of the present invention distributes contents of a contents server or the like on an IEEE1394 to another IEEE1394 network to enable the contents to be viewed and listened on a terminal on the IEEE1394.

Network structure of the present embodiment is the same as that of the above-described sixth embodiment shown in Fig. 17 and-a structure of the AV gateway device 1201 is the same as that of the above-described sixth embodiment shown in Fig. 19 with the only difference in failing to include the stream data format converting function 471.

The contents server 201 has a function based on IEEE1394 and a function based on AV/C Digital Command Set General Specification to enable transfer of a group of AV/C commands by making use of the IEEE1394 function. In addition, assume that the distribution contents 204 have a video format made of MPEG2.

Moreover, the terminal 203 has a function based on IEEE1394 and a function based on AV/C Digital Command Set General Specification to enable transfer of a group of AV/C commands by making use of the IEEE1394 function. In addition, the terminal 203 is assumed to be capable of receiving an MPEG2 video format.

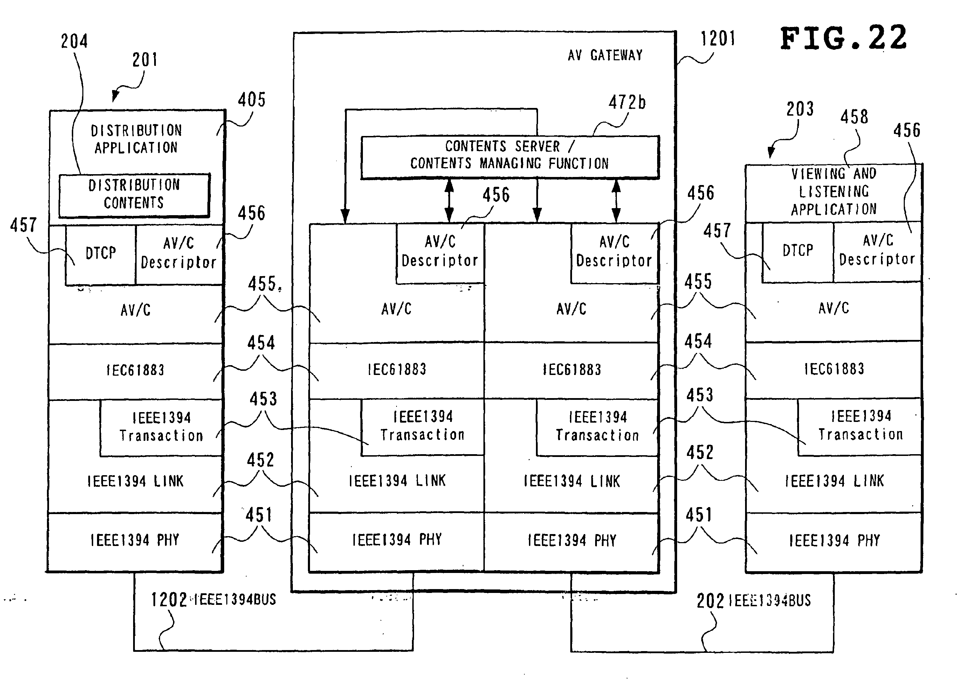

Fig. 22 shows a protocol stack in the network structure of the present embodiment shown in Fig. 17. The protocol stack is the same with the only difference being that the AV gateway device 1201 fails to be provided with the stream data format converting function 471 and the DTCP 457.

Function of each apparatus of the present embodiment is the same as that of each apparatus of the above-described sixth embodiment.

Related to thus structured AV gateway device 1201, a procedure at the time of notifying information of the distribution contents 204 to the terminal 203 is the same as that conducted at the time of notification according to the above-described sixth embodiment. More specifically, the correspondence table information 1410 is generated and notified to the terminal 203 by the command 1510.

Related to the AV gateway device 1201, description will be made of a procedure executed at the time of viewing and listening to the distribution contents 204 from the terminal 203.

The procedure at the time of viewing and listening to the distribution contents in the present embodiment is the same as that of the sixth embodiment with the differences being that since the distribution contents 204 transmitted by the contents server 201 are output in MPEG2 and a format receivable by the terminal 203 of contents which can be viewed and listened is MPEG2 as well, no conversion of a stream data format is made in the AV gateway device 1201 and that neither decryption nor encryption processing of copyrighted contents are executed by the DTCP in the AV gateway device 1201.

### (Eighth Embodiment)

An AV gateway device according to an eighth embodiment of the present invention distributes contents in a terminal on an IEEE1394 to an IEEE1394 network to enable the contents to be viewed and listened on a terminal on the IEEE1394.

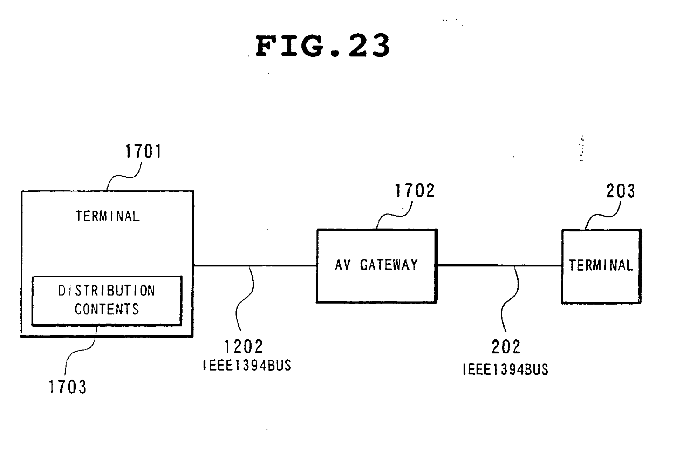

Fig. 23 shows a network structure of the present embodiment. In the network, there exist the bus 1202 conformed to IEEE1394 (serial bus related predetermined standard) and another bus 202 conformed to IEEE1394 (serial bus related predetermined standard), with the IEEE1394 bus 1202 and the IEEE1394 bus 202 being connected to each other through an AV gateway device, 1702. Here, a terminal 1701 for storing contents has a function of distributing contents to a terminal directly connected to the IEEE1394 bus 1202.

The terminal 1701 also has a function based on IEEE1394 and a function based on AV/C Digital Command Set General Specification to enable transfer of a group of AV/C commands by making use of the IEEE1394 function. In addition, distribution contents 1703 have a video format made of DV.

Moreover, the terminal 203 has a function based on IEEE1394 and a function based on AV/C Digital Command Set General Specification to enable transfer of a group of AV/C commands by making use of the IEEE1394 function. In addition, the terminal 203 is assumed to be capable of receiving an MPEG2 video format.

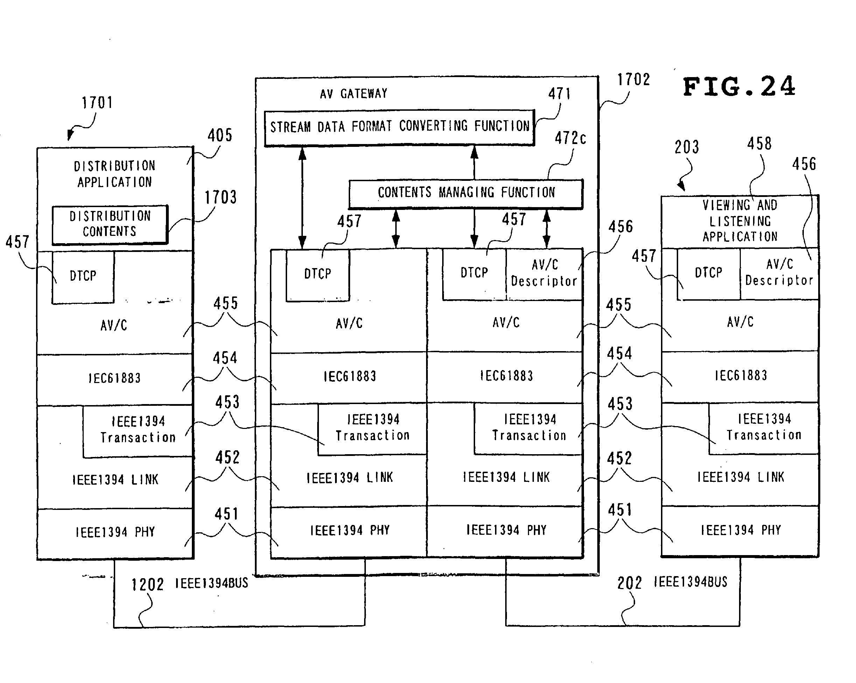

Fig. 24 shows a protocol stack in the network structure illustrated in Fig. 23. A protocol stack of the terminal 1701 is made of the IEEE1394 PHY 451, the IEEE1394 LINK 452, the IEEE1394 Transaction 453, the IEC61883 454, the AV/C 455 and the DTCP 457 for decryption copyrighted contents and authenticating an apparatus from the bottom and further includes, at the highest layer, the distribution application 405 for distributing contents

Next, a protocol stack of the AV gateway device 1702 includes, on the IEEE1394 bus 1202 side and on the IEEE1394 bus 202 side from the bottom, the IEEE1394 PHY 451, the IEEE1394 LINK 452, the IEEE1394 Transaction 453, the IEC61883 454, the AV/C 455, and the functions of the DTCP 457 for enciphering copyrighted contents and authenticating an apparatus and the AV/C Descriptor 456 for notifying contents and apparatus information. The AV/C Descriptor 456 is provided only on the IEEE1394.bus 202 side. Provided as a function of connecting the IEEE1394 bus 1202 and the IEEE1394 bus 202 are the stream data format converting function 471 for converting a contents format and a contents managing function 472c for managing contents of the terminal 1701 and notifying the terminal 203 of contents information.

Lastly, a protocol stack of the terminal 203 includes, from the bottom, the IEEE1394 PHY 451, the IEEE1394 LINK 452, the IEEE1394 Transaction 453, the IEC61883 454, the AV/C 455, the DTCP 457 for decryption copyrighted contents and authenticating an apparatus and the AV/C Descriptor 456 for notifying contents and apparatus information, and further includes at the highest layer, the viewing and listening application 458 for viewing and listening to contents.

Here, the terminal 1701 has a function equivalent to a VCR based on AV/C Digital Command Set General Specification and has an AV/C command which is mounted in a VCR. Assume here that a contents reproduction command is provided. In addition, on the side of the IEEE1394 bus 1202 of the AV gateway device 1702, a protocol communicable with a VCR is provided and has an AV/C Subunit (function) for indicating an AV apparatus. The IEEE1394 bus 202 side has a function equivalent to an AV-HDD based on AV/C Digital Command Set General Specification and further includes an AV/C command which is mounted in an AV-HDD. Assume here that a contents reproduction command is provided. The terminal 203 is mounted with a protocol communicable with an AV-HDD. As an interface, an AV/C Subunit (function) indicative of an AV apparatus is provided.

An internal structure of the AV gateway device 1702 according to the present embodiment is the same as the internal structure of the above-described sixth embodiment shown in Fig. 19.

With respect to thus structured AV gateway device 1702, a procedure for notifying the terminal 203 of information of the terminal 1701 in which the distribution contents 1703 are stored will be described with reference to the drawings. As the procedure conducted at the time of notifying the information about the distribution contents 1703, the same processing as in the flow chart of Fig. 4 which is described in the first embodiment is executed.

First, information related to the terminal 1701 in which the distribution contents 1703 to be viewed and listened are stored is obtained by the AV gateway device 1702 by manual input by a user or by such a means as automatic acquisition using the contents managing function 472c of the AV gateway device 1702 (Step S401). The information about the distribution contents 1703 is composed of information indicative of in which terminal the distribution contents exist. Assume here that the information, the terminal 1701, corresponds thereto. The information is stored in the memory 482 shown in Fig. 19.

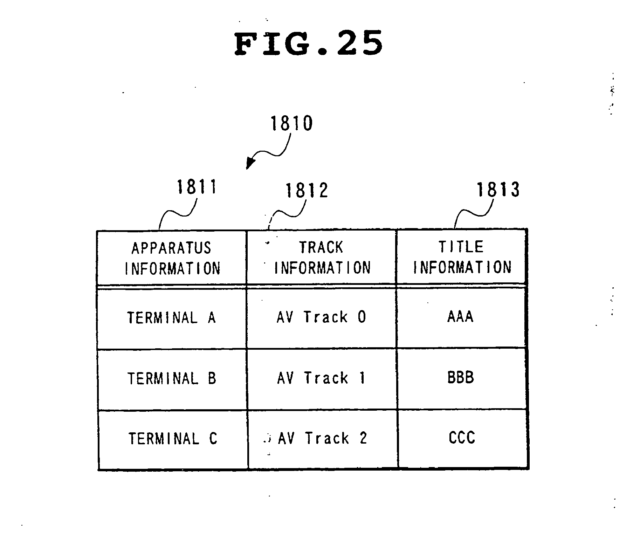

Next, in order to pretend as if the terminal 1701 is the content in the AV gateway device 1702, generate correspondence table information 1810 such that the information of the terminal 1701 corresponds to a track number (AV Track Number 0) which is track information in the AV gateway device 1702 (Step S402). The correspondence table information 1810, as illustrated in Fig. 25, is made up of apparatus information 1811, track information 1812, and title information 1813 as information visibly indicating the contents of the corresponding track number. The correspondence table information 1810 is generated on the memory 482 in the AV gateway device 1702. When a plurality of contents are registered, generate the correspondence table information 1810 such that each of the apparatus information corresponds to each of the plurality of tracks.

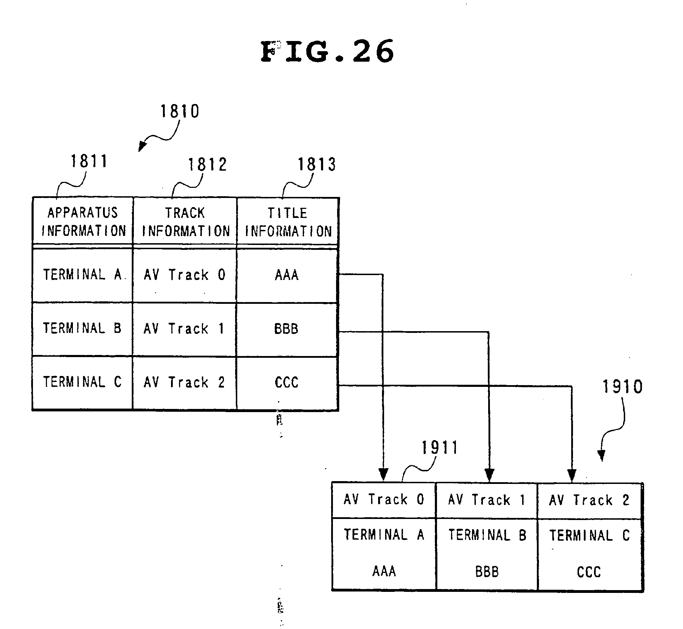

The correspondence table information 1810 shown in Fig. 25 is notified to the terminal 203 by using the AV/C Descriptor 456. At this time, as illustrated in Fig. 26, with reference to the correspondence table information 1810, add information 1911 composed of the apparatus information, the track information and the title information to a command 1910 having contents information and notify the terminal 203 that the terminal 1701 corresponds to the track number Track No. 0 (Step S403). The information 1911 added to the command 1910 having contents information does not necessarily need to include the information of the terminal 1701, but any information which can one-to-one correspond to information about the terminal 1701 is applicable such as arbitrary information included in the terminal 1701 or information registered by a user.

Upon receiving the command 1910 having contents information, the terminal 203 becomes aware of the existence of the terminal 1701 connected to another IEEE1394 bus 1202.

Description will be made of a procedure executed with respect to the AV gateway device 1702 at the time of viewing and listening to the distribution contents 1703 from the terminal 203 with reference to the drawings. The procedure at the time of viewing and listening to the distribution contents is the same as the processing in the flow chart shown in Fig. 7 which is described in the first embodiment.

The terminal 203 transmits a reproduction request command to the AV gateway device 1702 for reproducing the track number Track No. 0 corresponding to the terminal 1701 in which the distribution contents 1703 are stored for the purpose of viewing and listening to the distribution contents 1703 (Step S701). This reproduction request is made with reference to the title information visibly indicative of track contents of the information 1911 added to the command 1910.

Upon receiving the request command for reproducing the track number Track No. 0, the AV gateway device 1702 recognizes from the correspondence table information 1810 shown in Fig. 25 that the track number Track No. 0 indicates the terminal 1701. Next, to the terminal 1701, the AV gateway device 1702 transmits the reproduction request command for reproducing the distribution contents 1703 (Step S703).

Upon receiving the reproduction request command, the terminal 1701 transmits the distribution contents 1703 through the AV/C 455, the IEC61883 454, the IEEE1394 LINK 452 and the IEEE1394 PHY 451 to the IEEE1394 bus 1202 to transmit the same to the AV gateway device 1702 (Step S704). At this time, when the distribution contents 1703 are the contents copyrighted, they are transmitted to the IEEE1394 bus 1202 after being enciphered at the DTCP 457.

Simultaneously with the start of transmission of the distribution contents 1703 by the terminal 1701, the AV gateway device 1702 starts reception of the distribution contents 1703 (Step S705). The distribution contents 1703 received through the IEEE1394 PHY 451, the IEEE1394 LINK 452, the IEC61883 454 and the AV/C 455 are sent to the stream data format converting function 471. At this time, when the distribution contents 1703 are contents enciphered and copyrighted, they are sent to the stream data format converting function 471 after their codes are decrypted at the DTCP 457.

Since the stream format of the distribution contents 1703 received by the AV gateway device 1702,is DV and the stream format receivable by the terminal 203 is MPEG2, the AV gateway device 1702 sends the received distribution contents 1703 to the stream data format converting function 471 to conduct video format conversion of the distribution contents (Step S706).

The distribution contents 1703 converted to MPEG2 are transmitted to the IEEE1394 bus 202 through the AV/C 455, the IEC61883 454, the IEEE1394 LINK 452 and the IEEE1394 PHY 451. At this time, when the distribution contents 1703 are contents copyrighted, the contents are transmitted to the terminal 203 through the IEEE1394 bus 202 after they are enciphered at the DTCP 457 (Step S707).

Next, the terminal 203 starts receiving the distribution contents 1703 transmitted by the AV gateway device 1702 (Step S708). The distribution contents 1703 received through the IEEE1394 PHY 451, the IEEE1394 LINK 452, the IEC61883 454 and the AV/C 455 are reproduced by the viewing and listening application, so that they can be viewed and listened on the terminal 203. At this time, when the distribution contents 1703 are contents copyrighted and enciphered, they are reproduced by the viewing and listening application after their codes are decrypted at the DTCP 457 (Step S709).

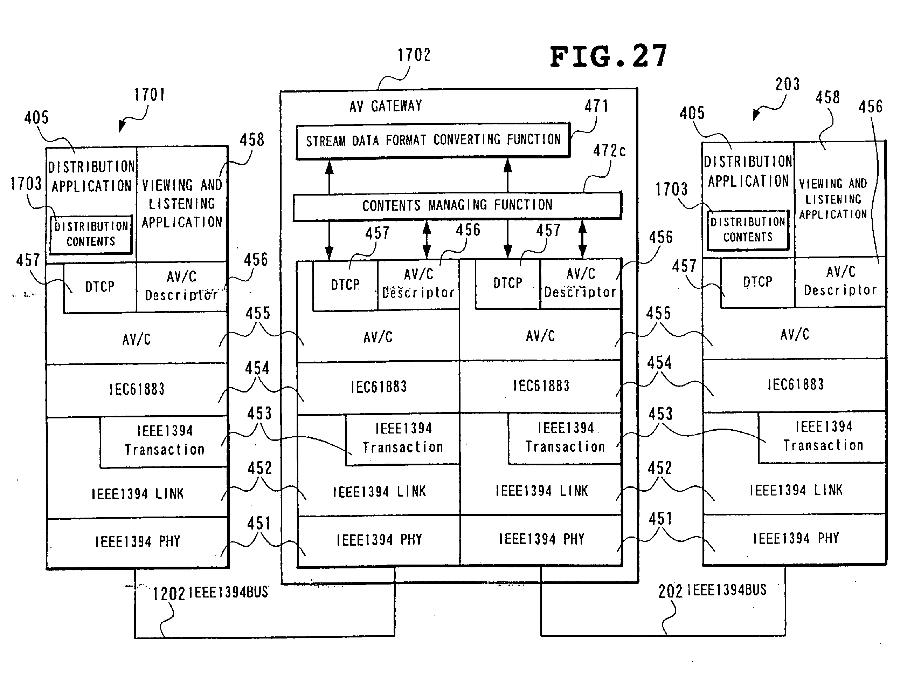

Although the eighth embodiment has been described with respect to the structure in which contents are distributed from the terminal 1701 to the terminal 203 by the control of the AV gateway device 1702, such protocol stack structure as shown in Fig. 27 enables bidirectional contents distribution. More specifically, the terminal 1701 and the terminal 203 have the same protocol stack and each have the distribution application 405 and the viewing and listening application 458. In addition, protocol stack structure of the AV gateway device 1702 on both the IEEE1394 bus 1202 side and the IEEE1394 bus 202 side is assumed to be the same as shown in Fig. 27.

This arrangement makes one of the terminals 1701 and 203 function as a distribution side and the other function as a viewing and listening side as required. Related operation is the same as that of the above-described eighth embodiment.

### (Ninth Embodiment)

An AV gateway device according to a ninth embodiment of the present invention distributes contents in a terminal on an IEEE1394 to another IEEE1394 network to enable the contents to be viewed and listened on a terminal on the IEEE1394.

Network structure of the present embodiment is the same as that of the above-described eighth embodiment shown in Fig. 23 and a structure of the AV gateway device 1702 is the same as that of the above-described sixth embodiment shown in Fig. 19 with the only difference in failing to include the stream data format converting function 471.

The terminal 1701 has a function based on IEEE1394 and a function based on AV/C Digital Command Set General Specification to enable transfer of a group of AV/C commands by making use of the IEEE1394 function. In addition, assume that the distribution contents 204 have a video format made of MPEG2.

The terminal 1701 has a function based on IEEE1394 and a function based on AV/C Digital Command Set General Specification to enable transfer of a group of AV/C commands by making use of the IEEE1394 function. In addition, the distribution contents 204 are assumed to be a video format made of MPEG2.

Moreover, the terminal 203 has a function based on IEEE1394 and a function based on AV/C Digital Command Set General Specification to enable transfer of a group of AV/C commands by making use of the IEEE1394 function. In addition, the terminal 203 is assumed to be capable of receiving an MPEG2 video format.

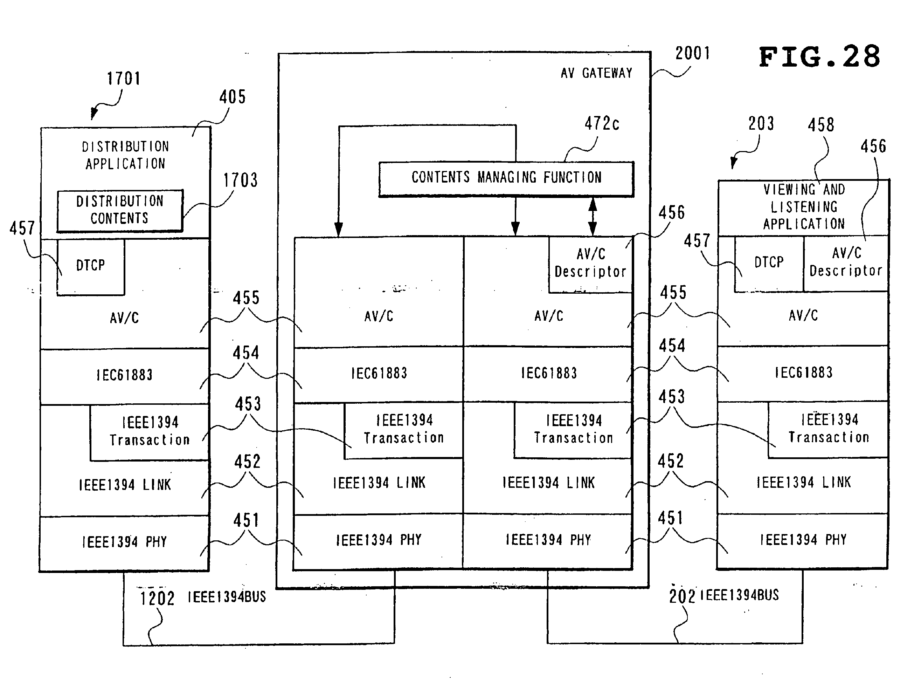

Fig. 28 shows a protocol stack in the network structure of the present embodiment shown in Fig. 23. The protocol stack is the same as that of the eighth embodiment with the only difference being that the AV gateway device 1702 fails to be provided with the stream data format converting function and the DTCP.

Function of each apparatus of the present embodiment is the same as that of each apparatus of the above-described eight embodiment.

Related to thus structured AV gateway device 1702, a procedure at the time of notifying information of the terminal 1701 in which the distribution contents 1703 are stored to the terminal 203 is the same as that conducted at the time of notification according to the above-described eighth embodiment. More specifically, the correspondence table information 1810 is generated and notified to the terminal 203 by the command 1910.

Related to the AV gateway device 1702, description will be made of a procedure executed at the time of viewing and listening to the distribution contents 1703 from the terminal 203.

The procedure at the time of viewing and listening to the distribution contents in the present embodiment is the same as that of the eighth embodiment with the differences being that since the distribution contents 1703 transmitted by the terminal 1701 are output in MPEG2 and a format receivable by the terminal 203 of contents which can be viewed and listened is MPEG2 as well, no conversion of a stream data format is made in the AV gateway device 1702 and that neither decryption nor encryption processing of copyrighted contents is executed by the DTCP in the AV gateway device 1702.

In the communication systems according to the above-described respective modes of implementation, the functions of the AV gateway devices and other functions can be realized not only as hardware but also by loading a gateway program as a computer program having the respective functions into a memory of a computer processing device. The gateway program is stored in a magnetic disk, a semiconductor memory or other recording medium. Then, loading the program from the recording medium into the computer processing device to control operation of the computer processing device realizes each of the above-described functions.

Although the present invention has been described with respect to the preferred modes of implementation and embodiments in the foregoing, the present invention is not limited to the above-described modes and embodiments, but is implemented in various forms within its technical idea.

As described in the foregoing, the present invention produces the following effects.

First, in a plurality of networks connected through a gateway device (AV gateway device), a user terminal (viewing and listening terminal) is notified as if distribution contents in a distribution server exist in the gateway device. As a result, the user terminal is allowed to receive the distribution contents in such a manner as if it communicates with the distribution server through the gateway device.

Secondly, correspondence table information is generated indicative of distribution contents in a distribution server and indicative of to which data of contents in a gateway device the distribution contents correspond in order to handle the distribution contents in the distribution server as one of the contents in the gateway device. In addition, a data format of the distribution contents in the distribution server is changed into a format which allows a user terminal to view and listen to the contents to enable distribution. Accordingly, the gateway device is allowed to recognize, from the number of contents designated by the user terminal, which distribution server is to be used and which distribution contents are to be distributed and to transmit the distribution contents to the user terminal, thereby enabling the distribution contents to be viewed and listened from the user terminal.

Thirdly, correspondence table information indicative of distribution contents in a distribution server and to which data of contents in a gateway device the distribution contents correspond is notified to a user terminal. Accordingly, the user terminal is allowed to recognize which contents can be viewed and listened.

Fourthly, at the time of generating correspondence table information indicative of distribution contents in a distribution server and to which data of contents in a gateway device the distribution contents correspond, add information visibly recognizable with ease to the correspondence table information and notify the user terminal of the obtained information. Accordingly, the user terminal is allowed to recognize with ease which contents can be viewed and listened.

Fifthly, when distribution contents in a distribution server are copyrighted, a gateway device has a function of decryption codes of the distribution contents and enciphering the contents at the time of distribution. This accordingly provides a function of preventing a third party from viewing and listening to copyrighted distribution contents.

Although the invention has been illustrated and described with respect to exemplary embodiment thereof, it should be understood by those skilled in the art that the foregoing and various other changes, omissions and additions may be made therein and thereto, without departing from the scope of the present invention. Therefore, the present invention should not be understood as limited to the specific embodiment set out above but to include all possible embodiments which can be embodied within a scope set out in the appended claims.

## Claims

1. A communication system for distributing contents (104) between a distribution server (101) and a terminal (203), comprising:
a gateway device (301) for managing and relaying distribution of said contents (104) between said terminal (203) and said distribution server (101) connected to networks independent of each other, wherein
said gateway device (301) comprising:
means for accepting a request for distribution of said contents (104) from said terminal (203),
means (482) for storing correspondence data indicative of correspondence between an address of said contents (104) in the network on said terminal side and an address of said contents in the network on said distribution server side in order to pretend as if contents (104) on said distribution server (101) are contents in said gateway device (301), and
means for obtaining, from said distribution server (101), said contents (104) whose distribution request is accepted from said terminal (203) based on said correspondence data to distribute the obtained contents (104) to said terminal (203),
wherein when said contents (104) to be distributed to said terminal (203) are enciphered, said gateway device (301) comprises means for converting said contents (104) to have a format receivable by said terminal (203) and being subjected to predetermined encryption to distribute the converted contents to said terminal (203), after decryption of said contents (104).

2. The communication system as set forth in claim 1, wherein
the network on said distribution server side is an IP network (102),
the network on said terminal side is a serial bus network (202), and
said gateway device (301) comprises means for distributing said contents (104) obtained from said distribution server (101) to said terminal (203) after converting the format of said contents (104) to a format receivable by said terminal (203).

3. The communication system as set forth in claim 1, wherein
said distribution server (101) distributes said contents (104) as a network sharing file, and
said gateway device (301) comprises means for assuming, in said correspondence data, the address of said contents (104) in the network on said distribution server side to be an address of said network sharing file.

4. The communication system as set forth in claim 1, wherein
the network on said distribution server side and the network on said terminal side are serial bus networks independent of each other.

5. The communication system as set forth in claim 4, wherein
said gateway device (301) comprises means for distributing said contents (104) obtained from said distribution server (101) based on the distribution request to said terminal (203) after converting the format of said contents (104) to a format receivable by said terminal (203).

6. The communication system as set forth in claim 1, wherein
the address of said contents (104) in the network on said terminal side in said correspondence data is a track number of said contents (104), and
said gateway device (301) comprises means for notifying the track number of said contents (104) to said terminal (203) and accepting the request for distribution of said contents (104) from said terminal (203) by the track number of said contents (104).

7. The communication system as set forth in claim 1, wherein
the address of said contents (104) in the network on said terminal side in said correspondence data is a service number of said contents (104), and
said gateway device (301) comprises means for notifying the service number of said contents (104) to said terminal and accepting the request for distribution of said contents (104) from said terminal (203) by the service number of said contents (104).

8. The communication system as set forth in claim 4, wherein
said gateway device (301) comprises means for enabling bidirectional contents distribution between said distribution server (101) and said terminal (203).

9. The communication system as set forth in claim 4, wherein
said serial bus network is an IEEE1394 network.

10. The communication system as set forth in claim 4, wherein
said gateway device (301) comprises means for executing, in said serial bus network, an AV apparatus control command conformed to IEC61883 and AV/C Digital Command Set General Specification standards in response to input of a reproduction command from said terminal (203).

11. The communication system as set forth in claim 4, wherein
said correspondence data is conformed to a standard for a contents and service notification system using an AV/C descriptor in the AV/C Digital Command Set General Specification.

12. The communication system as set forth in claim 3, wherein
to said correspondence data, information for a user to visibly identify said contents (104) is added together with the address of said contents (104) in said terminal side network and the address of said contents in said distribution server side network, and
said gateway device (301) comprises means for notifying said terminal (203) of the information for a user to visibly identify said contents.

13. The communication system as set forth in claim 12, wherein
said gateway device (301) comprises means for automatically obtaining the information for a user to visibly identify said contents (104) from said distribution server (101) to record the information in said correspondence data.

14. The communication system as set forth in claim 1, wherein
said gateway device (301) comprises means for enciphering said contents (104) to be distributed to said terminal (203) based on a 5C DTCP encryption system.

15. A gateway program for controlling a computer to relay distribution of contents (104) between a terminal (203) and a distribution server (101) connected to networks independent of each other, comprising the functions of
managing distribution of said contents (104) between said terminal (203) and said distribution server (101),
accepting a request for distribution of said contents (104) from said terminal (203),
storing correspondence data indicative of correspondence between an address of said contents (104) in the network on said terminal side and an address of said contents (104) in the network on said distribution server side in order to pretend as if contents (104) on said distribution server are contents in said gateway device,
obtaining, from said distribution server (101), said contents (104) whose distribution request is accepted from said terminal (203) based on said correspondence data to distribute the obtained contents to said terminal (203), and
when said contents (104) to be distributed to said terminal (203) are enciphered, converting said contents (104) to have a format receivable by said terminal (203) and being subjected to predetermined encryption to distribute the converted contents to said terminal (203), after decryption of said contents (104).

16. The gateway program as set forth in claim 15, wherein
the network on said distribution server side is an IP network (102),
the network on said terminal side is a serial bus network (202), and which further includes the function of:
distributing said contents (104) obtained from said distribution server (101) to said terminal (203) after converting the format of said contents (104) to a format receivable by said terminal (203).

17. The gateway program as set forth in claim 16, comprising the function of:
obtaining said contents (104) to be distributed by said server (101) as a network sharing file, wherein
the address of said contents (104) in the network on said distribution server side in said correspondence data is assumed to be an address of said network sharing file.

18. The gateway program as set forth in claim 15, wherein
the network on said distribution server side and the network on said terminal side are serial bus networks independent of each other, and which further includes the function of:
distributing said contents (104) obtained from said distribution server (101) based on the distribution request to said terminal (203) after converting the format of said contents (104) to a format receivable by said terminal (203).

19. The gateway program as set forth in claim 16, wherein
the address of said contents (104) in the network on said terminal side in said correspondence data is a track number of said contents (104), and which further includes the functions of:
notifying the track number of said contents (104) to said terminal (203), and
accepting the request for distribution of said contents (104) form said terminal (203) by the track number of said contents (104).

20. The gateway program as set forth in claim 19, further including the functions of:
accepting the request for distribution of said contents (104) from said terminal (203) by the service number of said contents (104).

## Patentansprüche

1. Kommunikationssystem zum Verteilen von Inhalten (104) zwischen einem Verteilungsserver (101) und einem Endgerät (203), das umfasst:
eine Gatewayvorrichtung (301) zum Verwalten und Weiterleiten der Verteilung der Inhalte (104) zwischen dem Endgerät (303) und dem Verteilungsserver (101), verbunden mit voneinander unabhängigen Netzwerken, wobei
die Gatewayvorrichtung (301) umfasst:
Mittel zum Akzeptieren einer Anfrage nach Verteilung der Inhalte (104) von dem Endgerät (203),
Mittel (482) zum Speichern von Übereinstimmungsdaten, die auf die Übereinstimmung zwischen einer Adresse der Inhalte (104) in dem Netzwerk auf der Endgerätseite und einer Adresse der Inhalte in dem Netzwerk auf der Verteilungsserverseite hinweisen, um vorzugeben, dass die Inhalte (104) auf dem Verteilungsserver (101) Inhalte in der Gatewayvorrichtung (301) sind, und
Mittel zum Erhalten, von dem Verteilungsserver (101), der Inhalte (104), deren Verteilungsanfrage von dem Endgerät (203), basierend auf den Übereinstimmungsdaten, akzeptiert wird, um die erhaltenen Inhalte (104) an das Endgerät (203) zu verteilen,
wobei, wenn die an das Endgerät (203) zu verteilenden Inhalte verschlüsselt sind, die Gatewayvornchtung (301) Mittel zum Umwandeln der Inhalte (104) umfasst, so dass sie ein durch das Endgerät (203) empfangbares Format aufweisen, und nach der Entschlüsselung der Inhalte (104) einer vorgegebenen Verschlüsselung unterworfen werden, um die umgewandelten Inhalte an das Endgerät (203) zu verteilen.

2. Kommunikationssystem gemäß Anspruch 1, wobei
das Netzwerk auf der Verteilungsserverseite ein IP-Netzwerk (102) ist,
das Netzwerk auf der Endgerätseite ein serielles Busnetzwerk (202) ist, und
die Gatewayvorrichtung (301) Mittel zum Verteilen der Inhalte (104), die von dem Verteilungsserver (101) erhalten wurden, an das Endgerät (203) nach dem Umwandeln des Formats der Inhalte (104) in ein durch das Endgerät (203) empfangbares Format umfasst.

3. Kommunikationssystem gemäß Anspruch 1, wobei
der Verteilungsserver (101) die Inhalte (104) als eine Netzwerkdatei für gemeinsamen Zugriff verteilt und
die Gatewayvorrichtung (301) Mittel für die Annahme umfasst, dass in den Übereinstimmungsdaten die Adresse der Inhalte (104) in dem Netzwerk auf der Verteilungsserverseite eine Adresse der Netzwerkdatei für gemeinsamen Zugriff ist.

4. Kommunikationssystem gemäß Anspruch 1, wobei das Netzwerk auf der Verteilungsserverseite und das Netzwerk auf der Endgerätseite voneinander unabhängige serielle Busnetzwerke sind.

5. Kommunikationssystem gemäß Anspruch 4, wobei
die Gatewayvorrichtung (301) Mittel zum Verteilen der von dem Verteilungsserver (101) erhaltenen Inhalte (104) basierend auf der Verteilungsanfrage an das Endgerät (203) nach dem Umwandeln des Format der Inhalte (104) in ein durch das Endgerät (203) empfangbares Format umfasst.

6. Kommunikationssystem gemäß Anspruch 1, wobei
die Adresse der Inhalte (104) in dem Netzwerk auf der Endgerätseite in den Übereinstimmungsdaten eine Spurnummer der Inhalte (104) ist, und
die Gatewayvorrichtung (301) Mittel zum Melden der Spurnummer der Inhalte (104) an das Endgerät (203) und Akzeptieren der Anfrage nach Verteilung der Inhalte (104) von dem Endgerät (203) durch die Spurzahl der Inhalte (104) umfasst.

7. Kommunikationssystem gemäß Anspruch 1, wobei
die Adresse der Inhalte (104) in dem Netzwerk auf der Endgerätseite in den Übereinstimmungsdaten eine Servicezahl der Inhalte (104) ist, und
die Gatewayvorrichtung (301) Mittel zum Melden der Servicezahl der Inhalte (104) an das Endgerät und Akzeptieren der Anfrage nach Verteilung der Inhalte (104) von dem Endgerät (203) durch die Servicezahl der Inhalte (104) umfasst.

8. Kommunikationssystem gemäß Anspruch 4, wobei
die Gatewayvorrichtung (301) Mittel zum Ermöglichen einer bidirektionalen Inhaltsverteilung zwischen dem Verteilungsserver (101) und dem Endgerät (203) umfasst.

9. Kommunikationssystem gemäß Anspruch 4, wobei
das serielle Busnetzwerk ein IEEE 1394-Netzwerk ist.

10. Kommunikationssystem gemäß Anspruch 4, wobei
die Gatewayvorrichtung (301) Mittel zum Ausfiihren, in dem seriellen Busnetzwerk, eines AV-Gerät-Steuerbefehls entsprechend IEC61883 und AV/C-Digitalbefehlssatz-Allgemeinbeschreibungsstandards als Antwort auf die Eingabe eines Wiedergabebefehls von dem Endgerät (203) umfasst.

11. Kommunikationssystem gemäß Anspruch 4, wobei
die Übereinstimmungsdaten einem Standard für ein Inhalte- und Servicemeldesystem unter Verwendung eines AV/C-Deskriptors in der AV/C-Digitalbefehlssatz-Allgemeinbeschreibung entsprechen.

12. Kommunikationssystem gemäß Anspruch 3, wobei
zu den Übereinstimmungsdaten Informationen für einen Nutzer zum sichtbaren Identifizieren der Inhalte (104) zugefügt werden zusammen mit der Adresse der Inhalte (104) in dem Netzwerk auf der Endgerätseite und der Adresse der Inhalte in dem Netzwerk auf der Verteilungsserverseite und
die Gatewayvorrichtung (301) Mittel zum Melden der Information für einen Nutzer zum sichtbaren Identifizieren der Inhalte an das Endgerät (203) umfasst.

13. Kommunikationssystem gemäß Anspruch 12, wobei
die Gatewayvorrichtung (301) Mittel zum automatischen Erhalten der Informationen für einen Nutzer zum sichtbaren Identifizieren der Inhalte (104) von dem Verteilungsserver (101) zum Aufzeichnen der Informationen in den Übereinstimmungsdaten umfasst.

14. Kommunikationssystem gemäß Anspruch 1, wobei
die Gatewayvorrichtung (301) Mittel zum Verschlüsseln der an das Endgerät (203) zu verteilenden Inhalte (104) basierend auf einem 5C DTCP-Verschlüsselungssystem umfasst.

15. Gatewayprogramm zum Steuern eines Computers zum Weiterleiten der Verteilung von Inhalten (104) zwischen einem Endgerät (203) und einem Verteilungsserver (101), verbunden mit voneinander unabhängigen Netzwerken, das die Funktionen umfasst:
Verwalten der Verteilung der Inhalte (104) zwischen dem Endgerät (203) und dem Verteilungsserver (101),
Akzeptieren einer Anfrage nach Verteilung der Inhalte (104) von dem Endgerät (203),
Speichern von Übereinstimmungsdaten, die auf Übereinstimmung zwischen einer Adresse der Inhalte (104) in dem Netzwerk auf der Endgerätseite und einer Adresse der Inhalte (104) in dem Netzwerk auf der Verteilungsserverseite hinweisen, um vorzugeben, dass Inhalte (104) auf dem Verteilungsserver Inhalte in der Gatewayvorrichtung sind,
Erhalten, von dem Verteilungsserver (101), der Inhalte (104), deren Verteilungsanfrage von dem Endgerät (203) basierend auf den Übereinstimmungsdaten akzeptiert wird, um die erhaltenen Inhalte an das Endgerät (203) zu verteilen, und
wenn die an das Endgerät (203) zu verteilenden Inhalte (104) verschlüsselt sind, Umwandeln der Inhalte (104), so dass sie ein durch das Endgerät (203) empfangbares Format aufweisen, und einer vorgegebenen Verschlüsselung unterzogen werden, um die umgewandelten Inhalte an das Endgerät (203) nach der Entschlüsselung der Inhalte (104) zu verteilen.

16. Gatewayprogramm gemäß Anspruch 15, wobei
das Netzwerk auf der Verteilungsserverseite ein IP-Netzwerk (102) ist,
das Netzwerk auf der Endgerätseite ein serielles Busnetzwerk (202) ist, und das weiter die Funktion umfasst:
Verteilen der Inhalte (104), die von dem Verteilungsserver (101) erhalten wurden, an das Endgerät (203) nach Umwandlung des Formats der Inhalte (104) in ein Format, das von dem Endgerät (203) empfangbar ist.

17. Gatewayprogramm gemäß Anspruch 16, das die Funktion umfasst:
Erhalten der Inhalte (104), die durch den Server (101) verteilt werden sollen, als eine Netzwerkdatei zur gemeinsamen Nutzung, wobei
angenommen wird, dass die Adresse der Inhalte (104) in dem Netzwerk auf der Verteilungsserverseite in den Übereinstimmungsdaten eine Adresse der Netzwerkdatei zur gemeinsamen Nutzung ist.

18. Gatewayprogramm gemäß Anspruch 15, wobei
das Netzwerk auf der Verteilungsserverseite und das Netzwerk auf der Endgerätseite voneinander unabhängige serielle Busnetzwerke sind, und das weiter die Funktion umfasst:
Verteilen der Inhalte (104), die von dem Verteilungsserver (101) basierend auf der Verteilungsanfrage an das Endgerät (203) erhalten wurden, nach Umwandlung des Formats der Inhalte (104) in ein durch das Endgerät (203) empfangbares Format.

19. Gatewayprogramm gemäß Anspruch 16, wobei
die Adresse der Inhalte in dem Netzwerk auf der Endgerätseite in den Übereinstimmungsdaten eine Spurzahl der Inhalte (104) ist, und das weiter die Funktionen umfasst:
Melden der Spurzahl der Inhalte (104) an das Endgerät (203) und
Akzeptieren der Anfrage nach Verteilung der Inhalte (104) von dem Endgerät (203) durch die Spurzahl der Inhalte (104).

20. Gatewayprogramm gemäß Anspruch 19, das weiter die Funktionen umfasst:
Akzeptieren der Anfrage nach Verteilung der Inhalte (104) von dem Endgerät (203) durch die Servicezahl der Inhalte (104).

## Revendications

1. Système de communication pour distribuer un contenu (104) entre un serveur de distribution (101) et un terminal (203), comprenant :
un dispositif de passerelle (301) pour gérer et retransmettre la distribution dudit contenu (104) entre ledit terminal (203) et ledit serveur de distribution (101) connecté à des réseaux indépendants les uns des autres, dans lequel,
ledit dispositif de passerelle (301) comprend :
des moyens pour accepter une demande de distribution dudit contenu (104) provenant dudit terminal (203),
des moyens (482) pour stocker des données de correspondance indicatrices de la correspondance entre une adresse dudit contenu (104) dans le réseau dudit côté terminal et une adresse dudit contenu dans le réseau dudit côté serveur de distribution afin de faire comme si le contenu (104) sur ledit serveur de distribution (101) était le contenu dans ledit dispositif de passerelle (301), et
des moyens pour obtenir, depuis ledit serveur de distribution (101), ledit contenu (104) dont la demande de distribution est acceptée depuis ledit terminal (203) en fonction desdites données de correspondance pour distribuer le contenu obtenu (104) vers ledit terminal (203),
dans lequel lorsque ledit contenu (104) à distribuer vers ledit terminal (203) est chiffré, ledit dispositif de passerelle (301) comprend des moyens pour convertir ledit contenu (104) afin d'avoir un format pouvant être reçu par ledit terminal (203) et soumis à un chiffrement prédéterminé pour distribuer le contenu converti vers ledit terminal (203), après déchiffrement dudit contenu (104).

2. Système de communication selon la revendication 1, dans lequel
le réseau dudit côté serveur de distribution est un réseau IP (102),
le réseau dudit côté terminal est un réseau à bus série (202), et
ledit dispositif de passerelle (301) comprend des moyens pour distribuer ledit contenu (104) obtenu depuis ledit serveur de distribution (101) vers ledit terminal (203) après conversion du format dudit contenu (104) en un format recevable par ledit terminal (203).

3. Système de communication selon la revendication 1, dans lequel
ledit serveur de distribution (101) distribue ledit contenu (104) en tant que fichier de partage réseau, et
ledit dispositif de passerelle (301) comprend des moyens pour supposer, dans lesdites données de correspondance, que l'adresse dudit contenu (104) dans le réseau dudit côté serveur de distribution est une adresse dudit fichier de partage réseau.

4. Système de communication selon la revendication 1, dans lequel
le réseau dudit côté serveur de distribution et le réseau dudit côté terminal sont des réseaux à bus série indépendants l'un de l'autre.

5. Système de communication selon la revendication 4, dans lequel
ledit dispositif de passerelle (301) comprend des moyens pour distribuer ledit contenu (104) obtenu depuis ledit serveur de distribution (101) en fonction de la demande de distribution vers ledit terminal (203) après conversion du format dudit contenu (104) en un format recevable par ledit terminal (203).

6. Système de communication selon la revendication 1, dans lequel
l'adresse dudit contenu (104) dans le réseau dudit côté terminal dans lesdites données de correspondance est un numéro de piste dudit contenu (104), et
ledit dispositif de passerelle (301) comprend des moyens pour notifier le numéro de piste dudit contenu (104) au dit terminal (203) et accepter la demande de distribution dudit contenu (104) provenant dudit terminal (203) par le numéro de piste dudit contenu (104).

7. Système de communication selon la revendication 1, dans lequel
l'adresse dudit contenu (104) dans le réseau dudit côté terminal dans lesdites données de correspondance est un numéro de service dudit contenu (104), et
ledit dispositif de passerelle (301) comprend des moyens pour notifier le numéro de service dudit contenu (104) au dit terminal et accepter la demande de distribution dudit contenu (104) provenant dudit terminal (203) par le numéro de service dudit contenu (104).

8. Système de communication selon la revendication 4, dans lequel
ledit dispositif de passerelle (301) comprend des moyens pour permettre une distribution bidirectionnelle du contenu entre ledit serveur de distribution (101) et ledit terminal (203).

9. Système de communication selon la revendication 4, dans lequel
ledit réseau à bus série est un réseau IEEE1394.

10. Système de communication selon la revendication 4, dans lequel
ledit dispositif de passerelle (301) comprend des moyens pour exécuter, dans ledit réseau à bus série, une commande de contrôle d'appareil AV conforme aux normes IEC61883 et spécification générale du jeu de commande numérique AV/C en réponse à l'entrée d'une commande de reproduction depuis ledit terminal (203).

11. Système de communication selon la revendication 4, dans lequel
lesdites données de correspondance sont conformes à une norme pour un système de notification de service et de contenu utilisant un descripteur AV/C dans la spécification générale du jeu de commande numérique AV/C.

12. Système de communication selon la revendication 3, dans lequel
aux dites données de correspondance, des informations pour qu'un utilisateur puisse identifier visiblement ledit contenu (104) sont ajoutées conjointement avec l'adresse dudit contenu (104) dans le réseau dudit côté terminal et l'adresse dudit contenu dans le réseau dudit côté serveur de distribution, et
ledit dispositif de passerelle (301) comprend des moyens pour notifier au dit terminal (203) les informations pour qu'un utilisateur puisse identifier visiblement ledit contenu.

13. Système de communication selon la revendication 12, dans lequel
ledit dispositif de passerelle (301) comprend des moyens pour obtenir automatiquement les informations pour qu'un utilisateur puisse identifier visiblement ledit contenu (104) depuis ledit serveur de distribution (101) afin d'enregistrer les informations dans lesdites données de correspondance.

14. Système de communication selon la revendication 1, dans lequel
ledit dispositif de passerelle (301) comprend des moyens pour chiffrer ledit contenu (104) à distribuer au dit terminal (203) en fonction d'un système de chiffrement 5C DTCP.

15. Programme de passerelle pour commander un ordinateur afin de retransmettre la distribution du contenu (104) entre un terminal (203) et un serveur de distribution (101) connecté à des réseaux indépendants l'un de l'autre, comprenant les fonctions consistant à :
gérer la distribution dudit contenu (104) entre ledit terminal (203) et ledit serveur de distribution (101),
accepter une demande pour la distribution dudit contenu (104) depuis ledit terminal (203),
stocker les données de correspondance indicatrices de la correspondance entre une adresse dudit contenu (104) dans le réseau dudit côté terminal et une adresse dudit contenu (104) dans le réseau dudit côté serveur de distribution afin de faire comme si le contenu (104) sur ledit serveur de distribution était le contenu dans ledit dispositif de passerelle,
obtenir, dudit serveur de distribution (101), ledit contenu (104) dont la demande de distribution est acceptée depuis ledit terminal (203) en fonction desdites données de correspondance afin de distribuer le contenu obtenu au dit terminal (203), et
lorsque ledit contenu (104) à distribuer au dit terminal (203) est chiffré, convertir ledit contenu (104) pour qu'il ait un format recevable par ledit terminal (203) et soumettre à un chiffrement prédéterminé pour distribuer le contenu converti au dit terminal (203), après déchiffrement dudit contenu (104).

16. Programme de passerelle selon la revendication 15, dans lequel
le réseau dudit côté serveur de distribution est un réseau IP (102),
le réseau dudit côté terminal est un réseau à bus série (202), et qui comprend en outre la fonction consistant à :
distribuer ledit contenu (104) obtenu depuis ledit serveur de distribution (101) au dit terminal (203) après conversion du format dudit contenu (104) en un format recevable par ledit terminal (203).

17. Programme de passerelle selon la revendication 16, comprenant la fonction consistant à :
obtenir ledit contenu (104) à distribuer par ledit serveur (101) en tant que fichier de partage réseau, dans lequel
l'adresse dudit contenu (104) dans le réseau dudit côté serveur de distribution dans lesdites données de correspondance est supposée être une adresse dudit fichier de partage réseau.

18. Programme de passerelle selon la revendication 15, dans lequel
le réseau dudit côté serveur de distribution et le réseau dudit côté terminal sont des réseaux à bus série indépendants l'un de l'autre, et qui comprend en outre la fonction consistant à :
distribuer ledit contenu (104) obtenu depuis ledit serveur de distribution (101) en fonction de la demande de distribution vers ledit terminal (203) après conversion du format dudit contenu (104) en un format recevable par ledit terminal (203).

19. Programme de passerelle selon la revendication 16, dans lequel
l'adresse dudit contenu (104) dans le réseau dudit côté terminal dans lesdites données de correspondance est un numéro de piste dudit contenu (104), et qui comprend en outre les fonctions consistant à :
notifier le numéro de piste dudit contenu (104) au dit terminal (203), et
accepter la demande de distribution dudit contenu (104) depuis ledit terminal (203) par le numéro de piste dudit contenu (104).

20. Programme de passerelle selon la revendication 19, comprenant en outre les fonctions consistant à :
accepter la demande de distribution dudit contenu (104) depuis ledit terminal (203) par le numéro de service dudit contenu (104).
